# EUROPEAN PATENT APPLICATION

(11) **EP 4 178 265 A1**
(43) Date of publication of application: **10.05.2023**
(21) Application number: 20945721.7
(22) Date of filing: 24.07.2020
(51) Int. Cl.: H04W 48/02

(54) **TERMINAL DEVICE ACCESS CONTROL METHOD AND APPARATUS**

(71) Applicant: Huawei Technologies Co., Ltd., Shenzhen, Guangdong 518129 (CN)
(72) Inventor: WU, Yedan, Shenzhen, Guangdong 518129 (CN); GENG, Tingting, Shenzhen, Guangdong 518129 (CN)
(74) Representative: Isarpatent
(86) International application number: PCT/CN2020/104602
(87) International publication number: WO 2022/016551

(57) **Abstract**

This application discloses an access control method and apparatus for a terminal device, to resolve communication failures occurring in a non-terrestrial network when a public land mobile network selected by a terminal device may not be a public land mobile network of a country in which the terminal device is located. The method includes: A network device receives public land mobile network information indicating a first public land mobile network selected by the terminal device. The network device obtains location information of the terminal device, and determines, based on the location information and country information that corresponds to the first public land mobile network, whether the terminal device is allowed to access the first public land mobile network.

## Description

### TECHNICAL FIELD

This application relates to the field of communication technologies, and in particular, to an access control method and apparatus for a terminal device.

### BACKGROUND

A public land mobile network (public land mobile network, PLMN) is a network that is constructed and operated by a government or an operator authorized by the government to provide land mobile communication services for the public. When selecting a PLMN, user equipment (user equipment, UE) needs to meet national safety regulations and regulation requirements. To be specific, the UE can access only a PLMN of a country in which the UE is located. For example, when the UE is in country A, the UE can access only a PLMN of country A. When the UE is in country B, the UE can access only a PLMN of country B. In a general terrestrial network, a radiation range of a base station is limited. Usually, the UE does not access a base station in another country. Therefore, in procedures of communication protocol standards, the UE is not restricted to selecting, for access, a PLMN that is not of a country in which the UE is located.

However, in a non-terrestrial network (non-terrestrial network, NTN), a higher orbit of a satellite indicates larger coverage of the satellite, and one satellite cell may cover a plurality of countries. In addition, because the satellite may be shared by core networks of a plurality of countries, the satellite cell may broadcast PLMN identities (PLMN identifications, PLMN IDs) of a plurality of countries. As a result, when performing PLMN selection and cell selection/reselection, the UE may select a PLMN that is not of a country in which the UE is located, causing communication failures.

### SUMMARY

This application provides an access control method and apparatus for a terminal device, to resolve communication failures occurring in an NTN when a PLMN selected by a terminal device may not be a PLMN of a country in which the terminal device is located.

According to a first aspect, this application provides an access control method for a terminal device. The method may be applied to an access network device, a chip, a chipset, a functional module in a chip that performs the method, or the like. The access network device is used as an example. The method includes: The access network device receives PLMN information, where the PLMN information indicates a first PLMN selected by a terminal device. The access network device obtains location information of the terminal device, and determines, based on the location information and country information that corresponds to the first PLMN, whether the terminal device is allowed to access the first PLMN.

In this embodiment of this application, the access network device determines whether the location information of the terminal device is consistent with the country information represented by the selected PLMN, to release or perform cell handover on the terminal device that may perform abnormal access, so that abnormal access of the terminal device can be avoided in a radio resource control (radio resource control, RRC) access phase.

In a possible design, when obtaining the location information of the terminal device, the access network device may position the terminal device, to obtain the location information. In the foregoing design, the access network device positions the terminal device, so that the access network device can obtain the location information of the terminal device, to determine whether the PLMN selected by the terminal device is appropriate.

In a possible design, when obtaining the location information of the terminal device, the access network device may alternatively receive the location information sent by the terminal device. In the foregoing design, the terminal device reports the location information of the terminal device, so that the access network device can obtain the location information of the terminal device, to determine whether the PLMN selected by the terminal device is appropriate.

In a possible design, when obtaining the location information of the terminal device, the access network device may alternatively receive the location information sent by the terminal device, and then position the terminal device. In the foregoing manner, the access network device may position the terminal device when the location information reported by the terminal device is inaccurate or when the access network device does not trust the location information reported by the terminal device, so that accurate location information is obtained.

In a possible design, the location information of the terminal device may be global positioning system (global positioning system, GPS) location information, for example, longitude and latitude information, of the terminal device. In the foregoing manner, the access network device can accurately determine whether the terminal device is in a country corresponding to the PLMN selected by the terminal device.

In a possible design, the location information of the terminal device may alternatively be information about a virtual cell in which the terminal device is located. In the foregoing manner, because the virtual cell may be large or small, and is fuzzy location information, privacy of the terminal device can be protected in this manner.

In a possible design, the location information of the terminal device may alternatively be country information of a country in which the terminal device is located. In the foregoing manner, because the country information is a large scope, privacy of the terminal device can be protected in this manner.

In a possible design, the access network device determines, based on the location information and the country information that corresponds to the first PLMN, whether the terminal device is allowed to access the first PLMN. In this case, when country information corresponding to the location information is inconsistent with the country information corresponding to the first PLMN, the access network device determines that the terminal device is not allowed to access the first PLMN. Alternatively, when country information corresponding to the location information is consistent with the country information corresponding to the first PLMN, the access network device determines that the terminal device is allowed to access the first PLMN. In the foregoing manner, the terminal device does not access a PLMN that is not of the country in which the terminal device is currently located.

In a possible design, that country information corresponding to the location information is inconsistent with the country information corresponding to the first PLMN may mean that a country corresponding to the location information is different from a country corresponding to the first PLMN.

In a possible design, that country information corresponding to the location information is inconsistent with the country information corresponding to the first PLMN may alternatively mean that a country corresponding to the location information is different from a country corresponding to the first PLMN, and a distance between a location corresponding to the location information and a national boundary of the country corresponding to the first PLMN is greater than a distance threshold. In the foregoing manner, access of a terminal device within a specific range near the national boundary is allowed, avoiding an access failure of the terminal device caused by a positioning error. This can ensure access efficiency of the terminal device, and improve user experience.

In a possible design, that country information corresponding to the location information is consistent with the country information corresponding to the first PLMN may mean that a country corresponding to the location information is the same as a country corresponding to the first PLMN.

In a possible design, after determining that the terminal device is not allowed to access the first PLMN, the access network device may further send an RRC release message to the terminal device, where the RRC release message is used to release an RRC connection of the terminal device.

In a possible design, the RRC release message carries at least either of the following information: a release cause and a PLMN identity that is allowed to be selected by the terminal device, and the release cause is that the first PLMN is not a PLMN of a country in which the terminal device is located. In the foregoing manner, the terminal device is informed of the PLMN ID that can be selected by the terminal device at a current location, avoiding selecting an inappropriate PLMN when initiating RRC setup or RRC resume again. This can improve an access speed and user experience.

In a possible design, after determining that the terminal device is not allowed to access the first PLMN, the access network device hands over the terminal device to a target cell based on the location information of the terminal device, where a country corresponding to at least one PLMN identity of the target cell is the same as the country corresponding to the location information of the terminal device. In the foregoing manner, less communication interruption of the terminal device occurs, improving user experience.

In a possible design, the access network device sends a handover cause to an access network device corresponding to the target cell or an AMF entity connected to an access network device corresponding to the target cell, where the handover cause is that the first PLMN is not a PLMN of a country in which the terminal device is located.

According to a second aspect, this application provides an access control method for a terminal device. The method may be applied to an access network device, a chip, a chipset, a functional module in a chip that performs the method, or the like. The access network device is used as an example. The method includes: The access network device receives PLMN information, where the PLMN information indicates a first PLMN selected by a terminal device. The access network device obtains location information of the terminal device, and determines, based on the location information and country information that corresponds to the first PLMN, whether the terminal device is allowed to access the first PLMN.

In this embodiment of this application, when the terminal device performs initial access, the access network device may allow access of the terminal device, and then determine whether the location information of the terminal device is consistent with the country information represented by the selected PLMN, to release or perform cell handover on the terminal device that may perform abnormal access, so that abnormal access of the terminal device can be avoided in an RRC access phase. In addition, the access network device may further inform the terminal device of the PLMN that can be selected, so that the terminal device does not select an inappropriate PLMN. This improves efficiency of PLMN selection.

In a possible design, when obtaining the location information of the terminal device, the access network device may position the terminal device, to obtain the location information. In the foregoing design, the access network device positions the terminal device, so that the access network device can obtain the location information of the terminal device, to determine whether the PLMN selected by the terminal device is appropriate.

In a possible design, when obtaining the location information of the terminal device, the access network device may alternatively receive the location information sent by the terminal device. In the foregoing design, the terminal device reports the location information of the terminal device, so that the access network device can obtain the location information of the terminal device, to determine whether the PLMN selected by the terminal device is appropriate.

In a possible design, when obtaining the location information of the terminal device, the access network device may alternatively receive the location information sent by the terminal device, and then position the terminal device. In the foregoing manner, the access network device may position the terminal device when the location information reported by the terminal device is inaccurate or when the access network device does not trust the location information reported by the terminal device, so that accurate location information is obtained.

In a possible design, the location information of the terminal device may be GPS location information, for example, longitude and latitude information, of the terminal device. In the foregoing manner, the access network device can accurately determine whether the terminal device is in a country corresponding to the PLMN selected by the terminal device.

In a possible design, the location information of the terminal device may alternatively be information about a virtual cell in which the terminal device is located. In the foregoing manner, because the virtual cell may be large or small, and is fuzzy location information, privacy of the terminal device can be protected in this manner.

In a possible design, the location information of the terminal device may alternatively be country information of a country in which the terminal device is located. In the foregoing manner, because the country information is a large scope, privacy of the terminal device can be protected in this manner.

In a possible design, the access network device determines, based on the location information and the country information that corresponds to the first PLMN, whether the terminal device is allowed to access the first PLMN. In this case, when country information corresponding to the location information is inconsistent with the country information corresponding to the first PLMN, the access network device determines that the terminal device is not allowed to access the first PLMN. Alternatively, when country information corresponding to the location information is consistent with the country information corresponding to the first PLMN, the access network device determines that the terminal device is allowed to access the first PLMN. In the foregoing manner, the terminal device does not access a PLMN that is not of the country in which the terminal device is currently located.

In a possible design, that country information corresponding to the location information is inconsistent with the country information corresponding to the first PLMN may mean that a country corresponding to the location information is different from a country corresponding to the first PLMN.

In a possible design, that country information corresponding to the location information is inconsistent with the country information corresponding to the first PLMN may alternatively mean that a country corresponding to the location information is different from a country corresponding to the first PLMN, and a distance between a location corresponding to the location information and a national boundary of the country corresponding to the first PLMN is greater than a distance threshold. In the foregoing manner, access of a terminal device within a specific range near the national boundary is allowed, avoiding an access failure of the terminal device caused by a positioning error. This can ensure access efficiency of the terminal device, and improve user experience.

In a possible design, that country information corresponding to the location information is consistent with the country information corresponding to the first PLMN may mean that a country corresponding to the location information is the same as a country corresponding to the first PLMN.

In a possible design, after determining that the terminal device is not allowed to access the first PLMN, the access network device sends an RRC release request message to an AMF entity, where the RRC release request message is for requesting the AMF entity to release the terminal device. In the foregoing design, a terminal device that initially accesses a network may be first allowed to access the network. When determining that the terminal device selects an inappropriate PLMN, the access network device triggers the AMF entity to initiate a release procedure.

In a possible design, the RRC release request message carries at least either of the following information: a release cause and a PLMN identity that is allowed to be selected by the terminal device, and the release cause is that the first PLMN is not a PLMN of a country in which the terminal device is located.

In a possible design, after the access network device sends the RRC release request message to the AMF entity, a network device receives a context release command sent by the AMF entity, where the context release command instructs the network device to release an RRC connection of the terminal device, the context release command carries a release cause, and the release cause is that the first PLMN is not a PLMN of a country in which the terminal device is located. The access network device sends an RRC release message to the terminal device, where the release information carries a PLMN identity that is allowed to be selected by the terminal device. In the foregoing manner, the access network device releases the terminal device that performs abnormal access, so that the terminal device can be restricted to complying with national safety regulations and regulatory requirements.

In a possible design, after receiving the context release command, the access network device may alternatively hand over the terminal device to a target cell based on the location information of the terminal device, where a country corresponding to at least one PLMN identity of the target cell is the same as a country corresponding to the location information of the terminal device. In the foregoing manner, less communication interruption of the terminal device occurs, improving user experience.

In a possible design, the access network device sends a handover cause to an access network device corresponding to the target cell or an AMF entity connected to an access network device corresponding to the target cell, where the handover cause is that the first PLMN is not a PLMN of a country in which the terminal device is located.

According to a third aspect, this application provides an access control method for a terminal device. The method may be applied to an AMF entity, a chip, a chipset, a functional module in a chip that performs the method, or the like. The AMF entity is used as an example. The method includes: The AMF entity receives an RRC release request message sent by an access network device, where the RRC release request message is for requesting the AMF entity to release a terminal device, the RRC release request message carries at least either of the following information: a release cause and a PLMN identity that is allowed to be selected by the terminal device, and the release cause is that a first PLMN is not a PLMN of a country in which the terminal device is located. The AMF entity sends a context release command to the access network device, where the context release command instructs a network device to release an RRC connection of the terminal device, the context release command carries a release cause, and the release cause is that the first PLMN is not a PLMN of a country in which the terminal device is located.

In this embodiment of this application, when the terminal device performs initial access, the access network device may allow access of the terminal device, and then determine whether location information of the terminal device is consistent with country information represented by the selected PLMN, to release or perform cell handover on the terminal device that may perform abnormal access, so that abnormal access of the terminal device can be avoided in an RRC access phase.

According to a fourth aspect, this application provides an access control method for a terminal device. The method may be applied to an AMF entity, a chip, a chipset, a functional module in a chip that performs the method, or the like. The AMF entity is used as an example. The method includes: The AMF entity receives PLMN information, where the PLMN information indicates a first PLMN selected by a terminal device. The AMF entity obtains location information of the terminal device, and determines, based on the location information and country information that corresponds to the first PLMN, whether the terminal device is allowed to access the first PLMN.

In this embodiment of this application, when the terminal device performs initial access, access of the terminal device may be allowed, and then the AMF entity determines whether the location information of the terminal device is consistent with the country information represented by the selected PLMN, to release or perform cell handover on the terminal device that may perform abnormal access, so that abnormal access of the terminal device can be avoided in an RRC access phase.

In a possible design, when obtaining the location information of the terminal device, the AMF entity may receive the location information sent by an access network device, where the location information is sent by the terminal device to the access network device, or the location information is obtained by the access network device by positioning the terminal device.

In a possible design, when obtaining the location information of the terminal device, the AMF entity may receive NAS signaling transparently transmitted by the access network device, where the NAS signaling carries the location information of the terminal device, and the NAS signaling is sent by the terminal device to the access network device. According to the foregoing design, privacy of the terminal device can be protected.

In a possible design, the location information of the terminal device may be GPS location information, for example, longitude and latitude information, of the terminal device. In the foregoing manner, the access network device can accurately determine whether the terminal device is in a country corresponding to the PLMN selected by the terminal device.

In a possible design, the location information of the terminal device may alternatively be information about a virtual cell in which the terminal device is located. In the foregoing manner, because the virtual cell may be large or small, and is fuzzy location information, privacy of the terminal device can be protected in this manner.

In a possible design, the location information of the terminal device may alternatively be country information of a country in which the terminal device is located. In the foregoing manner, because the country information is a large scope, privacy of the terminal device can be protected in this manner.

In a possible design, the AMF entity determines, based on the location information and the country information that corresponds to the first PLMN, whether the terminal device is allowed to access the first PLMN. In this case, when country information corresponding to the location information is inconsistent with the country information corresponding to the first PLMN, the AMF entity determines that the terminal device is not allowed to access the first PLMN. Alternatively, when country information corresponding to the location information is consistent with the country information corresponding to the first PLMN, the AMF entity determines that the terminal device is allowed to access the first PLMN. In the foregoing manner, the terminal device does not access a PLMN that is not of the country in which the terminal device is currently located.

In a possible design, that country information corresponding to the location information is inconsistent with the country information corresponding to the first PLMN may mean that a country corresponding to the location information is different from a country corresponding to the first PLMN.

In a possible design, that country information corresponding to the location information is inconsistent with the country information corresponding to the first PLMN may alternatively mean that a country corresponding to the location information is different from a country corresponding to the first PLMN, and a distance between a location corresponding to the location information and a national boundary of the country corresponding to the first PLMN is greater than a distance threshold. In the foregoing manner, access of a terminal device in a specific range near the national boundary is allowed, avoiding an access failure of the terminal device caused by a positioning error. This can ensure access efficiency of the terminal device, and improve user experience.

In a possible design, that country information corresponding to the location information is consistent with the country information corresponding to the first PLMN may mean that a country corresponding to the location information is the same as a country corresponding to the first PLMN.

In a possible design, after determining that the terminal device is not allowed to access the first PLMN, the AMF entity sends a context release command to the access network device, where the context release command instructs the access network device to release the terminal device. In the foregoing manner, the AMF entity releases the terminal device that performs abnormal access, so that the terminal device can be restricted to complying with national safety regulations and regulatory requirements.

In a possible design, the context release command carries at least either of the following information: a release cause and a PLMN identity that is allowed to be selected by the terminal device, and the release cause is that the first PLMN is not a PLMN of a country in which the terminal device is located. In the foregoing manner, the access network device can restrict access behavior of the terminal device based on the release cause and the PLMN identity that is allowed to be selected by the terminal device.

In a possible design, after determining that the terminal device is not allowed to access the first PLMN, the AMF entity updates a mobility restriction list of the terminal device, and sends an updated mobility restriction list to the access network device, where the updated mobility restriction list includes at least either of the following information: a PLMN identity that is allowed to be selected by the terminal device and a PLMN identity that is not allowed to be selected by the terminal device. According to the foregoing design, the access network device may hand over the terminal device based on the updated mobility restriction list, so that less communication interruption of the terminal device occurs, improving user experience.

According to a fifth aspect, this application provides an access control method for a terminal device. The method may be applied to an access network device, a chip, a chipset, a functional module in a chip that performs the method, or the like. The access network device is used as an example. The method includes: The access network device receives a context release command sent by an AMF entity, where the context release command instructs the access network device to release a terminal device, the context release command carries at least either of the following information: a release cause and a PLMN identity that is allowed to be selected by the terminal device, and the release cause is that a first PLMN selected by the terminal device is not a PLMN of a country in which the terminal device is located. The access network device hands over the terminal device to a target cell according to the context release command, where at least one PLMN identity of the target cell is the PLMN identity that is allowed to be selected by the terminal device.

In this embodiment of this application, the AMF entity releases the terminal device that performs abnormal access, so that the terminal device can be restricted to complying with national safety regulations and regulatory requirements. In addition, the context release command carries the release cause and the PLMN identity that is allowed to be selected by the terminal device, so that the access network device can restrict access behavior of the terminal device based on the release cause and the PLMN identity that is allowed to be selected by the terminal device.

In a possible design, the access network device sends a handover cause to an access network device corresponding to the target cell or the AMF entity, where the handover cause is that the first PLMN is not a PLMN of a country in which the terminal device is located.

According to a sixth aspect, this application provides an access control method for a terminal device. The method may be applied to an access network device, a chip, a chipset, a functional module in a chip that performs the method, or the like. The access network device is used as an example. The method includes: The access network device receives a mobility restriction list sent by an AMF, and hands over a terminal device to a target cell or releases a terminal device based on the mobility restriction list, where the mobility restriction list includes at least either of the following information: a public land mobile network PLMN identity that is allowed to be selected by the terminal device and a PLMN identity that is not allowed to be selected by the terminal device, and at least one PLMN identity of the target cell is the PLMN identity that is allowed to be selected by the terminal device.

In this embodiment of this application, the access network device may hand over the terminal device based on the updated mobility restriction list, so that less communication interruption of the terminal device occurs, improving user experience.

In a possible design, that the access network device hands over a terminal device to a target cell based on the mobility restriction list includes: The access network device sends, based on the mobility restriction list, a handover request to an access network device corresponding to the target cell or the AMF entity, where the handover is for requesting to hand over the terminal device to the target cell.

In a possible design, the handover request carries a handover cause, and the handover cause is that a PLMN selected by the terminal device is not a PLMN of a country in which the terminal device is located.

In a possible design, that the access network device releases a terminal device based on the mobility restriction list includes: The access network device sends an RRC release message to the terminal device based on the mobility restriction list, where the RRC release message is used to release an RRC connection of the terminal device.

In a possible design, the RRC release message carries at least either of the following information: a release cause and a PLMN identity that is allowed to be selected by the terminal device, and the release cause is that a PLMN selected by the terminal device is not a PLMN of a country in which the terminal device is located. In the foregoing manner, the terminal device is informed of the PLMN ID that can be selected by the terminal device at a current location, avoiding selecting an inappropriate PLMN when initiating RRC setup or RRC resume again. This can improve an access speed and user experience.

According to a seventh aspect, this application provides an access control method for a terminal device. The method may be applied to a terminal device, a chip, a chipset, a functional module in a chip that performs the method, or the like. The terminal device is used as an example. The method includes: The terminal device sends PLMN information to an access network device, where the PLMN information indicates a PLMN selected by the terminal device. The terminal device receives an RRC release message sent by the access network device, where the RRC release message is used to release an RRC connection of the terminal device, the RRC release message carries at least either of the following information: a release cause and a PLMN identity that is allowed to be selected by the terminal device, and the release cause is that the PLMN selected by the terminal device is not a PLMN of a country in which the terminal device is located.

In this embodiment of this application, when the terminal device selects an inappropriate PLMN, the access network device may release the terminal device, and inform the terminal device of the PLMN ID that can be selected by the terminal device at a current location, so that the terminal device does not select an inappropriate PLMN when initiating RRC setup or RRC resume again. This can improve an access speed and user experience.

In a possible design, after receiving the RRC release message sent by the access network device, the terminal device reselects a PLMN based on the PLMN identity that is allowed to be selected by the terminal device. In the foregoing design, the terminal device reselects the PLMN based on the PLMN identity that is allowed to be selected, so that a probability of selecting an inappropriate PLMN can be reduced.

According to an eighth aspect, an embodiment of this application provides a communication apparatus. The apparatus may be an access network device, or may be a chip in the access network device. The apparatus may include a processing unit, a transceiver unit, and a receiving unit. It should be understood that the sending unit and the receiving unit herein may alternatively be a transceiver unit. When the apparatus is the access network device, the processing unit may be a processor, and the sending unit and the receiving unit may be a transceiver. The communication device may further include a storage unit. The storage unit may be a memory, and is configured to store instructions. The processing unit executes the instructions stored in the storage unit, to enable the access network device to perform the method in any one of the first aspect or the possible designs of the first aspect, the method in any one of the second aspect or the possible designs of the second aspect, the method in any one of the sixth aspect or the possible designs of the sixth aspect, or the method in any one of the fifth aspect or the possible designs of the fifth aspect. When the apparatus is the chip in the access network device, the processing unit may be a processor, and the sending unit and the receiving unit may be an input/output interface, a pin, a circuit, or the like. The processing unit executes instructions stored in a storage unit, to enable the chip to perform the method in any one of the first aspect or the possible designs of the first aspect, the method in any one of the second aspect or the possible designs of the second aspect, the method in any one of the sixth aspect or the possible designs of the sixth aspect, or the method in any one of the fifth aspect or the possible designs of the fifth aspect. The storage unit is configured to store the instructions. The storage unit may be a storage unit (for example, a register or a cache) in the chip, or may be a storage unit (for example, a read-only memory or a random access memory) located outside the chip in the terminal device.

According to a ninth aspect, an embodiment of this application provides a communication apparatus. The apparatus may be an AMF entity, or may be a chip in the AMF entity. The apparatus may include a processing unit, a transceiver unit, and a receiving unit. It should be understood that the sending unit and the receiving unit herein may alternatively be a transceiver unit. When the apparatus is the AMF entity, the processing unit may be a processor, and the sending unit and the receiving unit may be a transceiver. The communication device may further include a storage unit. The storage unit may be a memory, and is configured to store instructions. The processing unit executes the instructions stored in the storage unit, to enable the AMF entity to perform the method in any one of the third aspect or the possible designs of the third aspect, or the method in any one of the fourth aspect or the possible designs of the fourth aspect. When the apparatus is the chip in the AMF entity, the processing unit may be a processor, and the sending unit and the receiving unit may be an input/output interface, a pin, a circuit, or the like. The processing unit executes instructions stored in a storage unit, to enable the chip to perform the method in any one of the third aspect or the possible designs of the third aspect, or the method in any one of the fourth aspect or the possible designs of the fourth aspect. The storage unit is configured to store the instructions. The storage unit may be a storage unit (for example, a register or a cache) in the chip, or may be a storage unit (for example, a read-only memory or a random access memory) located outside the chip in the terminal device.

According to a tenth aspect, an embodiment of this application provides a communication apparatus. The apparatus may be a terminal device, or may be a chip in the terminal device. The apparatus may include a processing unit, a transceiver unit, and a receiving unit. It should be understood that the sending unit and the receiving unit herein may alternatively be a transceiver unit. When the apparatus is the terminal device, the processing unit may be a processor, and the sending unit and the receiving unit may be a transceiver. The communication device may further include a storage unit. The storage unit may be a memory, and is configured to store instructions. The processing unit executes the instructions stored in the storage unit, to enable the terminal device to perform the method in any one of the seventh aspect or the possible designs of the seventh aspect. When the apparatus is the chip in the terminal device, the processing unit may be a processor, and the sending unit and the receiving unit may be an input/output interface, a pin, a circuit, or the like. The processing unit executes instructions stored in a storage unit, to enable the chip to perform the method in any one of the seventh aspect or the possible designs of the seventh aspect. The storage unit is configured to store the instructions. The storage unit may be a storage unit (for example, a register or a cache) in the chip, or may be a storage unit (for example, a read-only memory or a random access memory) located outside the chip in the terminal device.

According to an eleventh aspect, an embodiment of this application further provides a computer-readable storage medium. The computer-readable storage medium stores a computer program. When the computer program is run on a computer, the computer is enabled to perform the method in any one of the first aspect to the seventh aspect.

According to a twelfth aspect, an embodiment of this application further provides a computer program product including a program. When the computer program product runs on a computer, the computer is enabled to perform the method in any one of the first aspect to the seventh aspect.

According to a thirteenth aspect, a communication apparatus is provided. The apparatus includes a processor, a communication interface, and a memory. The communication interface is configured to transmit information, a message, and/or data between the apparatus and another apparatus. The memory is configured to store computer-executable instructions. When the apparatus runs, the processor executes the computer-executable instructions stored in the memory, to enable the apparatus to perform the method in any one of the first aspect and the possible designs of the first aspect, the method in any one of the second aspect and the possible designs of the second aspect, the method in any one of the fifth aspect and the possible designs of the fifth aspect, or the method in any one of the sixth aspect and the possible designs of the sixth aspect.

According to a fourteenth aspect, a communication apparatus is provided. The apparatus includes a processor, a communication interface, and a memory. The communication interface is configured to transmit information, a message, and/or data between the apparatus and another apparatus. The memory is configured to store computer-executable instructions. When the apparatus runs, the processor executes the computer-executable instructions stored in the memory, to enable the apparatus to perform the method in any one of the third aspect and the possible designs of the third aspect, or the method in any one of the fourth aspect and the possible designs of the fourth aspect.

According to a fifteenth aspect, a communication apparatus is provided. The apparatus includes a processor, a communication interface, and a memory. The communication interface is configured to transmit information, a message, and/or data between the apparatus and another apparatus. The memory is configured to store computer-executable instructions. When the apparatus runs, the processor executes the computer-executable instructions stored in the memory, to enable the apparatus to perform the method in any one of the seventh aspect and the possible designs of the seventh aspect.

According to a sixteenth aspect, an embodiment of this application provides a chip. The chip is coupled to a memory, and performs the method in any one of the first aspect and the possible designs of the first aspect, the method in any one of the second aspect and the possible designs of the second aspect, the method in any one of the fifth aspect and the possible designs of the fifth aspect, or the method in any one of the sixth aspect and the possible designs of the sixth aspect.

According to a seventeenth aspect, an embodiment of this application provides a chip. The chip is coupled to a memory, and performs the method in any one of the third aspect and the possible designs of the third aspect, or the method in any one of the fourth aspect and the possible designs of the fourth aspect.

According to an eighteenth aspect, an embodiment of this application provides a chip. The chip is coupled to a memory, and performs the method in any one of the seventh aspect and the possible designs of the seventh aspect.

According to a nineteenth aspect, an embodiment of this application provides a chip. The chip includes a communication interface and at least one processor. The processor runs to perform the method in any one of the first aspect and the possible designs of the first aspect, the method in any one of the second aspect and the possible designs of the second aspect, the method in any one of the fifth aspect and the possible designs of the fifth aspect, or the method in any one of the sixth aspect and the possible designs of the sixth aspect.

According to a twentieth aspect, an embodiment of this application provides a chip. The chip includes a communication interface and at least one processor. The processor runs to perform the method in any one of the third aspect and the possible designs of the third aspect, or the method in any one of the fourth aspect and the possible designs of the fourth aspect.

According to a twenty-first aspect, an embodiment of this application provides a chip. The chip includes a communication interface and at least one processor. The processor runs to perform the method in any one of the seventh aspect and the possible designs of the seventh aspect.

According to a twenty-second aspect, an embodiment of this application further provides a communication system. The system includes the access network device in the first aspect and the terminal device in the seventh aspect.

According to a twenty-third aspect, an embodiment of this application further provides a communication system. The system includes the access network device in the second aspect and the AMF entity in the third aspect, and may further include the terminal device in the seventh aspect.

According to a twenty-fourth aspect, an embodiment of this application further provides a communication system. The system includes the AMF entity in the fourth aspect and the access network device in the fifth aspect, and may further include the terminal device in the seventh aspect.

According to a twenty-fifth aspect, an embodiment of this application further provides a communication system. The system includes the AMF entity in the fourth aspect and the access network device in the sixth aspect, and may further include the terminal device in the seventh aspect.

It should be noted that "coupling" in embodiments of this application indicates a direct combination or an indirect combination of two components.

### BRIEF DESCRIPTION OF DRAWINGS

FIG. 1 is a schematic diagram of a protocol stack according to an embodiment of this application;
FIG. 2 is a schematic diagram of a satellite according to an embodiment of this application;
FIG. 3 is a schematic diagram of a structure of an access network device according to an embodiment of this application;
FIG. 4 is a schematic diagram of an NTN application scenario according to an embodiment of this application;
FIG. 5 is a schematic diagram of another NTN application scenario according to an embodiment of this application;
FIG. 6 is a schematic diagram of another NTN application scenario according to an embodiment of this application;
FIG. 7 is a schematic diagram of interfaces according to an embodiment of this application;
FIG. 8 is a schematic diagram of another NTN application scenario according to an embodiment of this application;
FIG. 9 is a schematic diagram of another NTN application scenario according to an embodiment of this application;
FIG. 10 is a schematic flowchart of an access control method for a terminal device according to an embodiment of this application;
FIG. 11 is a schematic diagram of a virtual cell according to an embodiment of this application;
FIG. 12 is a schematic diagram of an access process of a terminal device according to an embodiment of this application;
FIG. 13 is a schematic flowchart of an access control method for a terminal device according to an embodiment of this application;
FIG. 14 is a schematic diagram of an access process of a terminal device according to an embodiment of this application;
FIG. 15 is a schematic flowchart of an access control method for a terminal device according to an embodiment of this application;
FIG. 16A and FIG. 16B are a schematic diagram of an access process of a terminal device according to an embodiment of this application;
FIG. 17A and FIG. 17B are a schematic diagram of an access process of a terminal device according to an embodiment of this application;
FIG. 18 is a schematic diagram of a structure of a communication apparatus according to an embodiment of this application;
FIG. 19 is a schematic diagram of a structure of another communication apparatus according to an embodiment of this application;
FIG. 20 is a schematic diagram of a structure of an access network device according to an embodiment of this application; and
FIG. 21 is a schematic diagram of a structure of a terminal device according to an embodiment of this application.

### DESCRIPTION OF EMBODIMENTS

The following explains and describes some terms in this application, to facilitate understanding of a person skilled in the art.
1. Non-access stratum (non-access stratum, NAS) and access stratum (access stratum, AS)

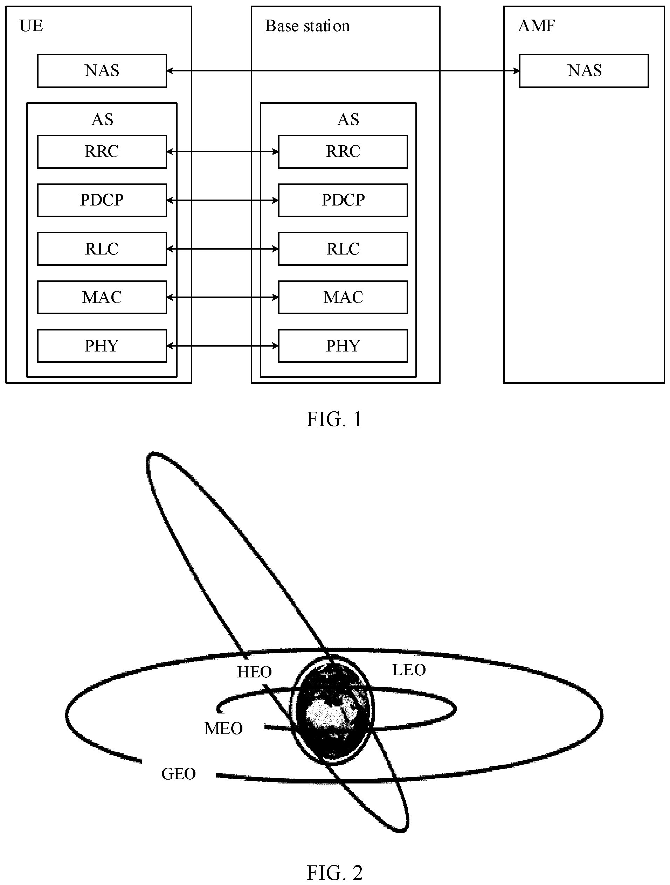

In long term evolution (long term evolution, LTE) and new radio (new radio, NR), UE communicates with a base station/an access and mobility management function (access and mobility management function, AMF) entity over an air interface. For example, as shown in FIG. 1, to better process data, a network protocol defines several protocol stacks with different functions. The NAS is a signaling channel between the UE and the AMF. Specifically, the UE sends a NAS message to the base station, and the base station transparently transmits the NAS message to the AMF without parsing the NAS message during the transparent transmission. The NAS is mainly responsible for some management functions, such as PLMN selection, manual selection, access control, registration, and information subscription. A specific process may be performed in coordination with another protocol layer (such as the AS).

The AS is a protocol layer other than the NAS, and may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY). The AS is mainly responsible for functions such as handover, encryption, data retransmission, sorting, and sending.

### 2. PLMN

In daily life, the PLMN usually provides network services for a terminal device. The PLMN is a network that is established and operated by a government or an operator authorized by the government to provide land mobile communication services for the public. Different PLMN identities (identifications, IDs) may be used to distinguish between different PLMNs. A PLMN identity consists of a mobile country code (mobile country code, MCC) and a mobile network code (mobile network code, MNC). The MCC uniquely identifies a country to which a mobile subscriber belongs. For example, the MCC of China is 460. The MNC uniquely identifies a network in the country. For example, the MNC of China Mobile is 00, and the MNC of China Unicom is 01.

When accessing a base station, the UE needs to select a network. A network selection process is PLMN selection. PLMN selection can be as follows:
A1: The AS of the UE scans radio frequency (radio frequency, RF) channels (channels) of all NR frequency bands (bands) depending on a capability of the UE, to find an available PLMN. The UE finds a cell having best RSRP on each frequency, and reads a system information block 1 (system information block 1, SIB 1) of the cell, to obtain a PLMN ID.
A2: The AS of the UE reports a PLMN list (list) to the NAS of the UE, where the PLMN list includes PLMN IDs obtained by the AS of the UE.
A3: After receiving the PLMN list reported by the AS of the UE, the NAS of the UE selects one of the PLMN IDs as the PLMN that the UE is to access.

When the UE performs PLMN selection, a PLMN searched by the UE may be: a registered PLMN (registered PLMN, RPLMN), which is a PLMN registered before the UE is powered off or disconnected from a network; an equivalent PLMN (equivalent PLMN, EPLMN), which is a PLMN having a same priority as the PLMN currently selected by the UE; a home PLMN (home PLMN, HPLMN), where an identification of the HPLMN is stored in a subscriber identity module (subscriber identity module, SIM) card of a mobile phone, and each SIM card has only one HPLMN burnt at delivery; or an equivalent HPLMN (equivalent HPLMN, EHPLMN), which is a PLMN having a same priority as the HPLMN.

### 3. NTN Communication

NTN communication may also be referred to as satellite communication. There are two types of satellite communication architectures: a transparent (transparent) forwarding architecture and a regenerative (regenerative) architecture. In the transparent forwarding architecture, a satellite serves only as a relay (relay) or an amplifier for radio frequency filtering, amplification, and the like, to regenerate a signal. In the regenerative architecture, a satellite may serve as a next-generation NodeB (generated NodeB, gNB), a distributed unit (distributed unit, DU), or a relay. Different from the relay in the transparent forwarding architecture, the relay in the regenerative architecture is also capable of signal processing as well as serving as a relay, which is similar to an integrated access and backhaul (integrated access and backhaul, IAB) node or another relay node. When the satellite serves as the gNB, the DU, the IAB node, or the another relay node, functions of the satellite is similar to functions of a common gNB, DU, IAB node, or another relay node.

In NTN communication, an access network device or a part of functions of the access network device is deployed on a non-terrestrial device (for example, a high altitude platform station or a satellite) to provide seamless coverage for the terminal device. Because the non-terrestrial device is less susceptible to natural disasters, reliability of a communication system can be improved. For ease of description and understanding of solutions in embodiments of this application, in this application, an NTN communication system in which an access network device is deployed on a satellite is subsequently used as an example for description. In addition, for ease of description, in this application, "an access network device on a satellite" is subsequently replaced with "a satellite" for description, and "NTN communication" is subsequently replaced with "satellite communication" for description. In other words, communication between a terminal device and a satellite subsequently described in this application actually refers to communication between the terminal device and an access network device on the satellite. Unified descriptions are provided herein. Details are not described below again.

Based on satellite altitudes, namely, satellite orbit altitudes, a satellite system may include a high elliptical orbit (highly elliptical orbit, HEO), a geostationary earth orbit (geostationary earth orbit, GEO) satellite, a medium earth orbit (medium earth orbit, MEO) satellite, and a low-earth orbit (low-earth orbit, LEO) satellite, as shown in FIG. 2. In addition, the NTN system may further include an air network device, for example, a high altitude platform station (high altitude platform station, HAPS) communication system. The network device in the present invention is not limited to the foregoing example.

It should be noted that the terms in embodiments of this application may vary with continuous development of technologies, but all of the terms fall within the protection scope of this application.

To make objectives, technical solution, and advantages of embodiments of this application clearer, the following further describes embodiments of this application in detail with reference to the accompanying drawings.

Network elements in embodiments of this application include a network device and a terminal device.

The network device may be an access network device, or may be a core network device. The core network device may be a functional network element in a core network, for example, may be an access and mobility management function. The access and mobility management function may be configured to manage access control and mobility of the terminal device. During actual application, the access and mobility management function includes a mobility management function of a mobility management entity (mobility management entity, NIME) in a network framework in LTE, and further includes an access management function. Specifically, the access and mobility management function may be responsible for registration of the terminal device, mobility management, a tracking area update procedure, reachability detection, selection of a session management function network element, mobility state transition management, and the like. For example, in 5G, the access and mobility management function may be an AMF network element. In future communication, for example, in 6G, the access and mobility management function may still be an AMF network element, or have another name. This is not limited in this application.

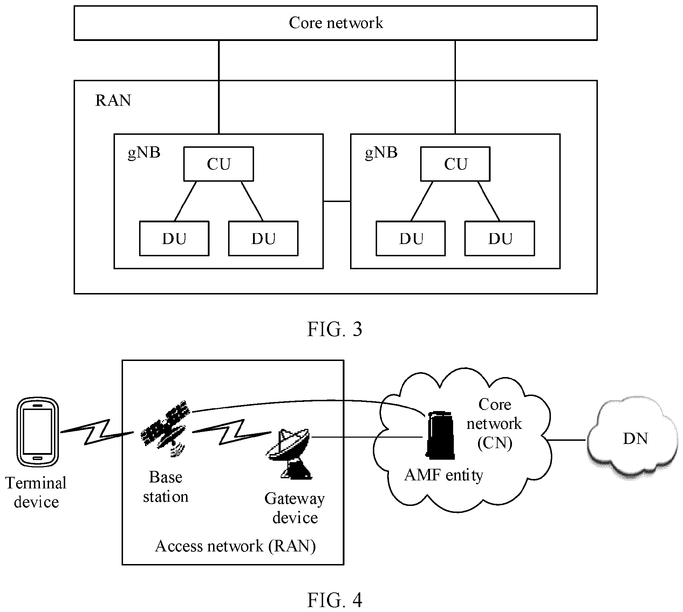

The access network device is an entity for transmitting or receiving signals on a network side, for example, a next-generation NodeB (generation NodeB, gNodeB). The access network device may be a device configured to communicate with a mobile device. The access network device may be an access point (access point, AP) in a wireless local area network (wireless local area network, WLAN), an evolved NodeB (evolved NodeB, eNB or eNodeB) in long term evolution (long term evolution, LTE), a relay station, an access point, an integrated access and backhaul (integrated access and backhaul, IAB) node, a vehicle-mounted device, a wearable device, an access network device in a future 5G network, an access network device in a future evolved public land mobile network (public land mobile network, PLMN), a gNB in an NR system, or the like. In addition, in embodiments of this application, the access network device provides services for a cell, and the terminal device communicates with the access network device by using a transmission resource (for example, a frequency domain resource or a spectrum resource) used by the cell. The access network device in embodiments of this application may be a central unit (central unit, CU) or a DU. Alternatively, the access network device may include a CU and a DU, for example, as shown in FIG. 3. The CU and the DU may be physically separated, or may be deployed together. This is not specifically limited in embodiments of this application. One CU may be connected to one DU, or a plurality of DUs may share one CU to reduce costs and facilitate network expansion. CU-DU division may be performed by protocol stacks. In a possible manner, a radio resource control (radio resource control, RRC) layer, a service data adaptation protocol (service data adaptation protocol, SDAP) layer, and a packet data convergence protocol (packet data convergence protocol, PDCP) layer are deployed in the CU, and a radio link control (radio link control, RLC) layer, a media access control (media access control, MAC) layer, and a physical layer are deployed in the DU. In the present invention, the foregoing protocol stack division manner is not completely limited, and there may be another division manner. The CU and the DU are connected through an F1 interface. The CU represents that a gNB is connected to a core network through an Ng interface. The access network device in embodiments of this application may be a central unit control plane (CU-CP) node or a central unit user plane (CU-UP) node, or the network device may include a CU-CP and a CU-UP. The CU-CP is responsible for a control plane function, and mainly includes RRC and PDCP-C. The PDCP-C is mainly responsible for encryption, decryption, integrity protection, data transmission, and the like of control plane data. The CU-UP is responsible for user plane functions, and mainly includes SDAP and PDCP-U. The SDAP is mainly responsible for processing data of the core network and mapping a flow (flow) to a bearer. The PDCP-U is mainly responsible for encryption, decryption, integrity protection, header compression, serial number maintenance, data transmission, and the like on a data plane. The CU-CP and the CU-UP are connected through an E1 interface. The CU-CP represents that the gNB is connected to the core network through an Ng interface, and connected to the DU through F1-C (a control plane). The CU-UP is connected to the DU through F1-U (a user plane). Certainly, in another possible implementation, the PDCP-C is also in the CU-UP. The access network device mentioned in embodiments of this application may be a CU, a DU, a device including a CU and a DU, or a device including a control plane CU node (a CU-CP node), a user plane CU node (a CU-UP node), and a DU node. In addition, in another possible case, the access network device may be another apparatus that provides a wireless communication function for the terminal device. A specific technology and a specific device form used for the access network device are not limited in embodiments of this application. For ease of description, in embodiments of this application, an apparatus that provides a wireless communication function for the terminal device is referred to as an access network device.

The terminal device may be a wireless terminal device capable of receiving scheduling and indication information of the access network device. The wireless terminal device may be a device that provides voice and/or data connectivity for a user, a handheld device having a wireless connection function, or another processing device connected to a wireless modem. The wireless terminal device may communicate with one or more core networks or the internet through a radio access network (for example, a radio access network, RAN). The wireless terminal device may be a mobile terminal device, for example, a mobile phone (which is also referred to as a "cellular" phone or a mobile phone (mobile phone)), a computer, and a data card. For example, the wireless terminal device may be a portable, pocket-sized, handheld, computer built-in, or vehicle-mounted mobile apparatus that exchanges voice and/or data with the radio access network. For example, the wireless terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal (remote terminal), an access terminal (access terminal), a user terminal (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the wireless terminal device may be a wearable device and a next-generation communication system, for example, a terminal device in a 5G network, a terminal device in a future evolved PLMN, or a terminal device in an NR communication system.

In addition, embodiments of this application are further applicable to another future-oriented communication technology. Network architectures and service scenarios described in this application are intended to describe the technical solutions in this application more clearly, but are not intended to limit the technical solutions provided in this application. A person of ordinary skill in the art may know that as network architectures evolve and a new service scenario emerges, the technical solutions provided in this application are also applicable to similar technical problems.

It should be noted that a type and a standard of the foregoing communication system are not limited in embodiments of this application. For example, the communication system may be a 5th generation (The 5th Generation, 5G) communication system or an LTE communication system.

Embodiments of this application may be applied to a 4th generation (the fourth generation, 4G) mobile communication system, a 5G system, an NTN system, vehicle to everything (vehicle to everything, V2X), long term evolution-vehicle (LTE-vehicle, LTE-V), vehicle to vehicle (vehicle to vehicle, V2V), internet of vehicles, machine type communication (Machine Type Communication, MTC), and internet of things (internet of things, IoT), long term evolution-machine to machine (LTE-machine to machine, LTE-M), machine to machine (machine to machine, M2M), or a future mobile communication system.

The following separately describes each application scenario in detail with reference to the accompanying drawings.

For example, in an application scenario shown in FIG. 4, a satellite, serving as a base station, may set up an N2 or Ng connection to an AMF entity in a core network, to provide a radio access service for a terminal device.

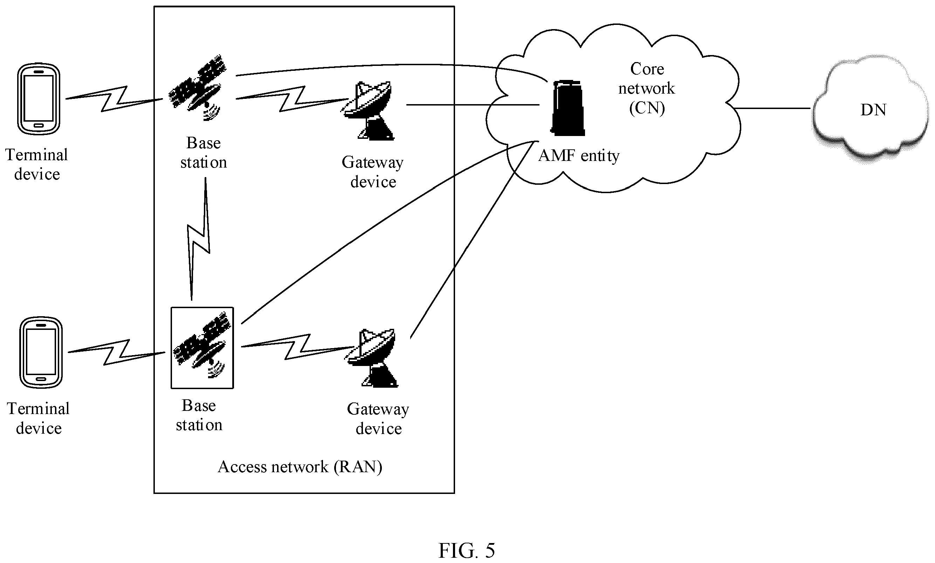

For example, in a communication system, an X2 or Xn connection may be set up between two base stations in a RAN, to transmit data such as cell information, so that cell reselection and handover of the terminal device is implemented. For example, the two base stations that set up a connection in the RAN may be: a satellite serving as a base station and a satellite serving as a base station, a satellite serving as a base station and a conventional base station, a base station including a plurality of partial functions and a conventional base station, or a base station including a plurality of partial functions and a satellite serving as a base station. In an application scenario shown in FIG. 5, a connection may be set up between two satellites serving as base stations, to exchange data and signaling.

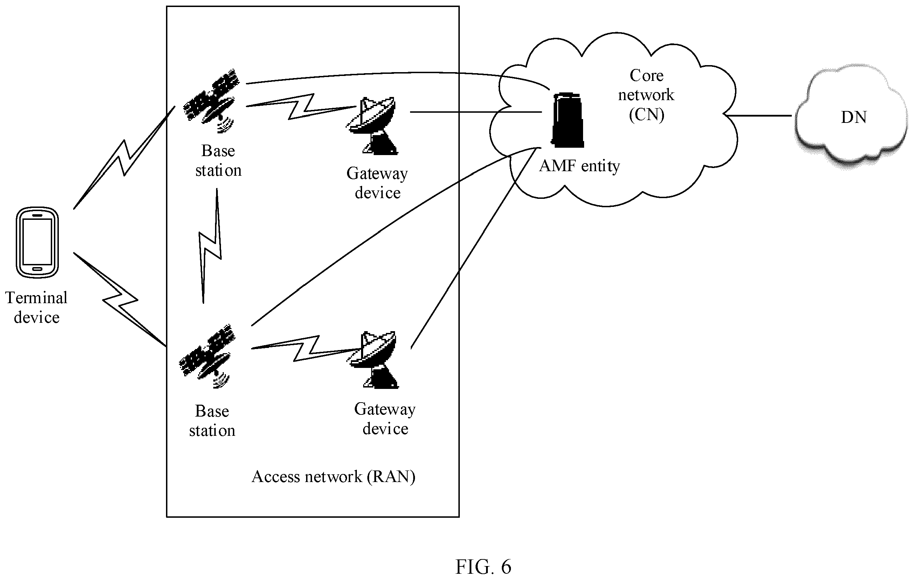

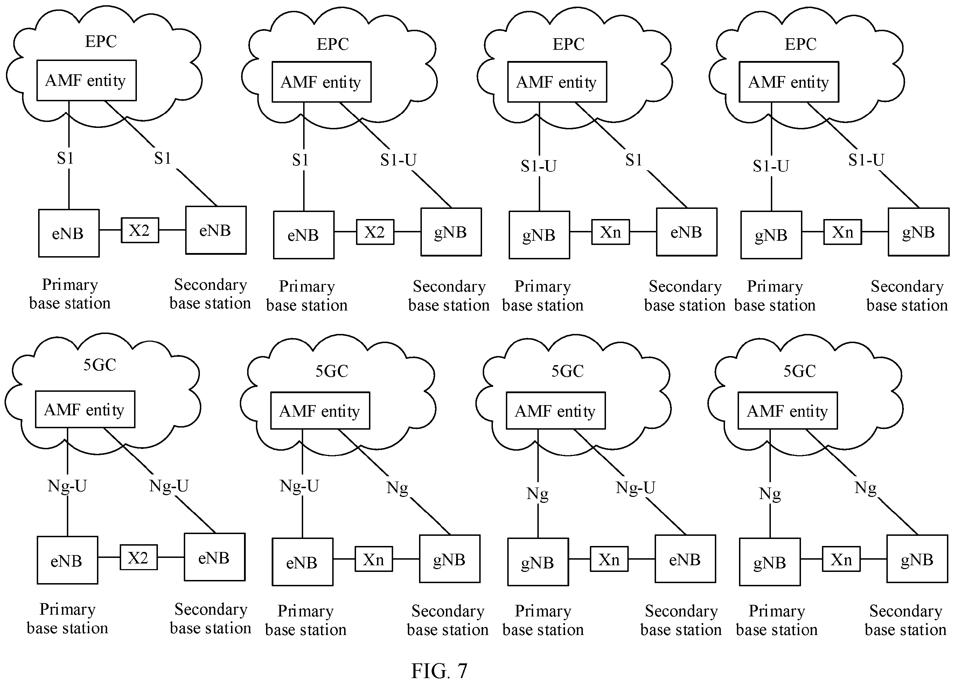

For example, in a communication system supporting carrier aggregation, a dual-connectivity (dual-connectivity, DC) technology may be used for implementation, so that a higher rate is provided for a user and spectral efficiency is improved. In the communication system, a terminal device supporting dual-connectivity may be connected to two base stations, to increase a throughput rate of a single user. As shown in FIG. 6, a connection also needs to be set up, through a corresponding interface, between the two base stations connected to the terminal device, to exchange data and signaling. It should be noted that one of the two base stations connected to the terminal device serves as a primary base station, and the other serves as a secondary base station. As shown in a schematic diagram of interfaces in FIG. 7, an interface between an AMF entity and a base station and an interface between two base stations vary accordingly when the base stations are connected to different core networks and types of the base stations are different.

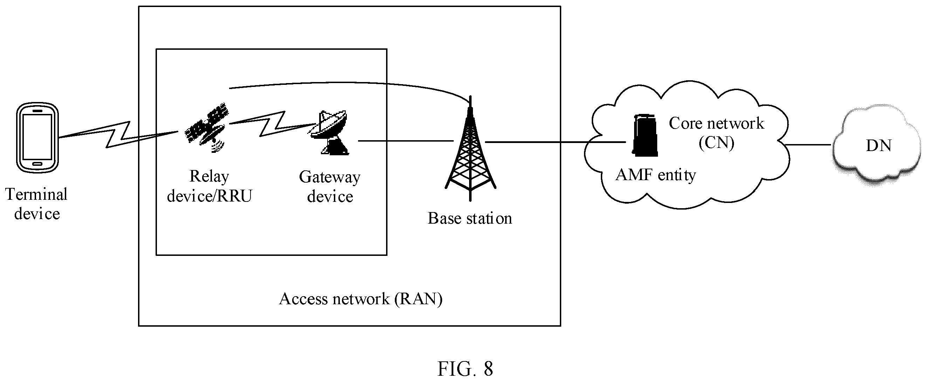

For example, in an application scenario shown in FIG. 8, a satellite may alternatively serve as a relay device between a terminal device and a base station, or serve as a remote radio unit (remote radio unit, RRU) of a base station. In this scenario, the satellite is mainly responsible for an L1 relay, for physical layer forwarding, which is invisible to an upper layer.

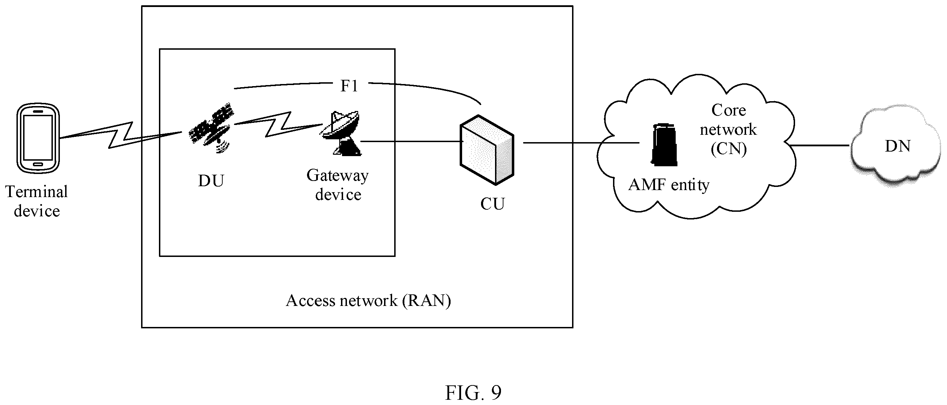

For example, in an application scenario shown in FIG. 9, a base station in a RAN is split into two functional parts: a DU and a CU, where a satellite may serve as the DU. In this application scenario, an interface between the DU and the CU is an F1 interface.

It should be further noted that the application scenarios shown in FIG. 4 to FIG. 9 are merely examples of application scenarios applicable to this application, and a satellite is used as an example in the foregoing examples.

Currently, when the UE performs PLMN selection, a selected PLMN ID mainly satisfies the following condition: A PLMN corresponding to the PLMN ID is an RPLMN, an EPLMN, an HPLMN, or an EHPLMN. When the UE performs cell selection and reselection, a selected cell mainly satisfies the following condition: A PLMN corresponding to at least one PLMN ID in PLMN IDs of the cell is an RPLMN, an EPLMN, an HPLMN, or an EHPLMN.

In terrestrial communication, in an RRC setup or RRC resume process, the UE includes, in an RRC setup complete message or an RRC resume complete message, a PLMN ID selected by the UE, and a network allows access of the UE provided that the PLMN ID selected by the UE satisfies the foregoing condition.

However, in satellite communication, a communication range covered by a satellite is very large. For example, a beam of a GEO satellite can cover an area of hundreds of kilometers. In an area with dense countries, it is likely that one satellite cell covers several countries. In addition, because the satellite may be shared by core networks of a plurality of countries, the satellite cell may broadcast PLMN IDs of core networks of a plurality of countries. As a result, when performing PLMN selection and cell selection/reselection, the UE may select a PLMN that is not of a country in which the UE is located, causing communication failures.

Based on this, embodiments of this application provide an access control method and apparatus for a terminal device, to resolve communication failures occurring in an NTN when a PLMN selected by a terminal device may not be a PLMN of a country in which the terminal device is located. The method and the apparatus are based on a same inventive concept. Because the method and the apparatus have a similar problem-resolving principle, for implementations of the apparatus and the method, refer to each other. Repeated parts are not described again.

It should be understood that, in embodiments of this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually represents an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

It should be understood that, in descriptions of this application, words such as "first" and "second" are merely used for distinction and description, and shall not be understood as an indication or implication of relative importance or an indication or implication of an order.

With reference to the accompanying drawings, the following describes in detail the access control method for a terminal device provided in this application.

### Embodiment 1

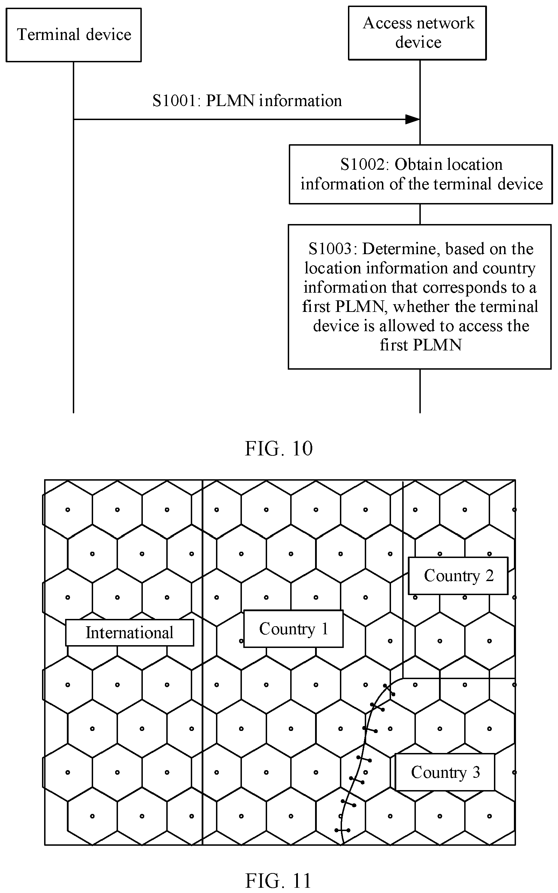

FIG. 10 shows an access control method for a terminal device according to an embodiment of this application. The access control method for a terminal device provided in this application may be applied to an NTN. The method may be applied to a scenario in which a terminal device in an RRC idle state sets up an RRC connection, or a scenario in which a terminal device in an RRC inactive state resumes an RRC connection. The access control method for a terminal device may specifically include the following steps.

S1001: A terminal device sends PLMN information to an access network device, where the PLMN information indicates a first PLMN selected by the terminal device. Correspondingly, the access network device receives the PLMN information sent by the terminal device.

For example, the access network device may be a satellite. For example, the access network device may be a satellite connected to a core network, as an independent access network device. Alternatively, the access network device may be a satellite connected to a terrestrial base station, as a relay device. Alternatively, the access network device may be a satellite connected to a terrestrial CU, as a DU.

In an implementation, the terminal device may send an RRC setup complete message or an RRC resume complete message to the access network device. The RRC setup complete message or the RRC resume complete message carries the PLMN information.

Optionally, before step S1001, the terminal device may send an RRC setup request or an RRC resume request to the access network device. The RRC setup request is for requesting the access network device to set up an RRC connection. The RRC resume request is for requesting the access network device to resume an RRC connection.

Further, after receiving the RRC setup request or the RRC resume request sent by the terminal device, the access network device may send an RRC setup message or an RRC resume message to the terminal device. The RRC setup message or the RRC resume message indicates the terminal device to set up a signaling radio bearer 1 (signaling radio bearer 1, SRB 1).

S1002: The access network device obtains location information of the terminal device.

In a possible implementation, the access network device may position the terminal device, to obtain the location information. For example, the access network device may position the terminal device in the following manner: The terminal device measures at least one of the following parameters: a timing advance (timing advance, TA) of each access network device, a signal strength difference of each access network device, an angle of arrival (angle of arrival, AoA) of a signal of each access network device, and the like. The terminal device reports the measured parameter to the access network device. The access network device determines a location of the terminal device based on the parameter reported by the terminal device.

In another possible implementation, the access network device may receive the location information sent by the terminal device. For example, when the terminal device sends the RRC setup complete message or the RRC resume complete message to the access network device, the RRC setup complete message or the RRC resume complete message may carry the location information of the terminal device.

In still another possible implementation, the terminal device may report the location information of the terminal device to the access network device. If the access network device does not trust the location information reported by the terminal device, the access network device may position the terminal device.

For example, the location information of the terminal device may be global positioning system (global positioning system, GPS) location information, for example, longitude and latitude information, of the terminal device.

Alternatively, the location information of the terminal device may be information about a virtual cell in which the terminal device is located, and an (even or uneven) area covered by the access network device is divided into a plurality of virtual cells, for example, virtual cells shown in FIG. 11. These virtual cells may correspond to national boundaries as much as possible. Information about a virtual cell may be broadcast in a system message of the cell. In the foregoing manner, because the virtual cell may be large or small, and is fuzzy location information, privacy of the terminal device can be protected in this manner.

Alternatively, the location information of the terminal device may be country information of a country in which the terminal device is located. For example, the terminal device may obtain national boundary information via a system message broadcast by a cell, and obtain GPS location information of the terminal device through positioning. The terminal device may determine, based on the national boundary information and the GPS location information of the terminal device, the country in which the terminal device is located.

S1003: The access network device determines, based on the location information and country information that corresponds to the first PLMN, whether the terminal device is allowed to access the first PLMN.

In an implementation, when country information corresponding to the location information is inconsistent with the country information corresponding to the first PLMN, the access network device may determine that the terminal device is not allowed to access the first PLMN.

When country information corresponding to the location information is consistent with the country information corresponding to the first PLMN, the access network device may determine that the terminal device is allowed to access the first PLMN.

In an example description, that country information corresponding to the location information is inconsistent with the country information corresponding to the first PLMN may mean that a country corresponding to the location information is different from a country corresponding to the first PLMN. That country information corresponding to the location information is consistent with the country information corresponding to the first PLMN may mean that a country corresponding to the location information is the same as a country corresponding to the first PLMN. For example, if the country corresponding to the location information is country A, and the country corresponding to the first PLMN is country B, it may be considered that the country information corresponding to the location information is inconsistent with the country information corresponding to the first PLMN. If the country corresponding to the location information is country A, and the country corresponding to the first PLMN is country A, it may be considered that the country information corresponding to the location information is consistent with the country information corresponding to the first PLMN.

In another example description, that country information corresponding to the location information is inconsistent with the country information corresponding to the first PLMN may mean that a country corresponding to the location information is different from a country corresponding to the first PLMN, and a distance between a location corresponding to the location information and a national boundary of the country corresponding to the first PLMN is greater than a distance threshold. For example, it is assumed that the distance threshold is 50 m. If the country corresponding to the location information is country A, the country corresponding to the first PLMN is country B, and the distance between the location corresponding to the location information and the national boundary of country B is greater than 50 m, it may be considered that the country information corresponding to the location information is inconsistent with the country information corresponding to the first PLMN. If the country corresponding to the location information is country A, the country corresponding to the first PLMN is country B, and the distance between the location corresponding to the location information and the national boundary of country B is less than 50 m, it may be considered that the country information corresponding to the location information is consistent with the country information corresponding to the first PLMN. In the foregoing manner, access of a terminal device within a specific range near the national boundary is allowed, avoiding an access failure of the terminal device caused by a positioning error. This can ensure access efficiency of the terminal device, and improve user experience.

In some embodiments, after determining that the terminal device is not allowed to access the first PLMN, the access network device may send an RRC release message to the terminal device, where the RRC release message is used to release an RRC connection of the terminal device. After receiving the RRC release message, the terminal device may enter an RRC idle state or an RRC inactive state.

For example, the RRC release message may carry at least either of the following information: a release cause and one or more PLMN identities that are allowed to be selected by the terminal device, and the release cause is that the first PLMN is not a PLMN of the country in which the terminal device is located. In the foregoing manner, the terminal device is informed of the PLMN IDs that can be selected by the terminal device at a current location, avoiding selecting an inappropriate PLMN when initiating RRC setup or RRC resume again. This can improve an access speed and user experience.

In some other embodiments, after determining that the terminal device is not allowed to access the first PLMN, the access network device may alternatively hand over the terminal device to a target cell based on the location information of the terminal device, where a country corresponding to at least one PLMN identity of the target cell is the same as the country corresponding to the location information of the terminal device.

In an implementation, the access network device may further send a handover cause to an access network device corresponding to the target cell or an AMF entity connected to an access network device corresponding to the target cell, where the handover cause is that the first PLMN is not a PLMN of the country in which the terminal device is located.

For example, the access network device may send a handover request to the access network device corresponding to the target cell or the AMF entity connected to the access network device corresponding to the target cell, where the handover request is for requesting to hand over the terminal device to the target cell, the handover request carries the handover cause, and the handover cause is that the first PLMN is not the PLMN of the country in which the terminal device is located.

In some embodiments, the access network device may determine the target cell based on a recorded PLMN identity of each cell, and send the handover request to the access network device corresponding to the target cell or the AMF entity connected to the access network device corresponding to the target cell.

Optionally, the access network device may further receive a handover failure message sent by the access network device corresponding to the target cell or the AMF entity connected to the access network device corresponding to the target cell, where the handover failure message may carry a reject cause, and the reject cause is that none of the PLMN identities of the target cell is a PLMN identity of the country in which the terminal device is located. Because a PLMN identity of the cell may change, if the access network device does not update the record in a timely manner, an inappropriate target cell may be selected. In this case, the access network device corresponding to the target cell or the AMF entity connected to the access network device corresponding to the target cell may send the handover failure message to the access network device, and may further inform the access network device of a handover failure cause, where the handover failure cause is that none of the PLMN identities of the target cell is the PLMN identity of the country in which the terminal device is located.

In addition, the access network device may further send, to the terminal device, the PLMN identities that are allowed to be selected by the terminal device.

In some embodiments, after determining that the terminal device is allowed to access the first PLMN, the access network device may set up a context of the terminal device with the AMF entity.

In Embodiment 1 of this application, the access network device determines whether the location information of the terminal device is consistent with the country information represented by the selected PLMN, to release or perform cell handover on the terminal device that may perform abnormal access, so that abnormal access of the terminal device can be avoided in an RRC access phase. In addition, the access network device may further inform the terminal device of the PLMNs that can be selected, so that the terminal device does not select an inappropriate PLMN. This improves efficiency of PLMN selection.

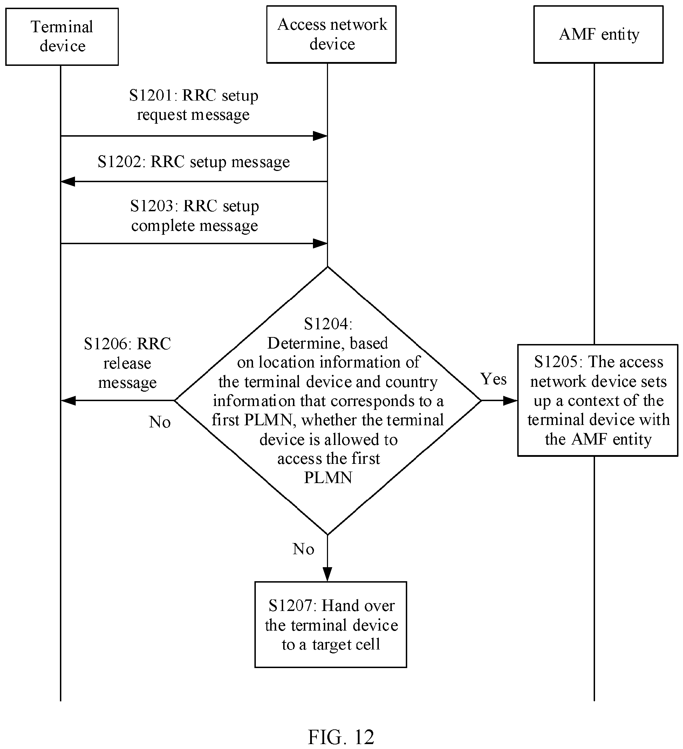

To better understand the method provided in this embodiment of this application, the following describes in detail an access process of the terminal device with reference to the scenario in which the terminal device in an RRC idle state sets up an RRC connection. The access process of the terminal device may be shown in FIG. 12.

S1201: The terminal device sends an RRC setup request message to an access network device, where the RRC setup request message is for requesting the access network device to set up an RRC connection to the terminal device.

S1202: The access network device sends an RRC setup message to the terminal device, where the RRC setup message indicates the terminal device to set up the RRC connection.

S1203: The terminal device sends an RRC setup complete message to the access network device, where the RRC setup complete message is for informing the access network device that the terminal device has set up the RRC connection, and the RRC setup complete message carries a PLMN ID of a first PLMN selected by the terminal device.

S 1204: The access network device determines, based on location information of the terminal device and country information that corresponds to the first PLMN, whether the terminal device is allowed to access the first PLMN. If the terminal device is allowed to access the first PLMN, step S 1205 is performed. If the terminal device is not allowed to access the first PLMN, step S1206 or S1207 is performed.

The location information of the terminal device may be obtained in any one of the following manners.

Manner 1: The terminal device reports the location information to the access network device via the RRC setup complete message or the RRC setup request message.

Manner 2: The location information of the terminal device may be obtained by the access network device by positioning the terminal device.

Manner 3: The terminal device reports the location information to the access network device via the RRC setup complete message, and the access network device positions the terminal device after receiving the location information.

S1205: The access network device sets up a context of the terminal device with an AMF entity.

S1206: The access network device sends an RRC release message to the terminal device, where the RRC release message indicates the terminal device to release the RRC connection.

Optionally, the RRC release message may carry at least either of the following information: a release cause and a PLMN identity that is allowed to be selected by the terminal device, and the release cause is that the first PLMN is not a PLMN of a country in which the terminal device is located.

S1207: The access network device hands over the terminal device to a target cell, where a country corresponding to at least one PLMN identity of the target cell is the same as a country corresponding to the location information of the terminal device.

Optionally, when sending a handover request, the access network device may include a handover cause in the handover request, where the handover cause is that the first PLMN is not a PLMN of a country in which the terminal device is located.

In addition, the access network device may further send, to the terminal device, the PLMN identity that is allowed to be selected by the terminal device.

It may be understood that an access process of the terminal device in a scenario in which the terminal device in an RRC inactive state resumes an RRC connection is similar to the access process of the terminal device in the scenario in which the terminal device in the RRC idle state sets up an RRC connection, and a difference is that sent messages are different. In an example, in the scenario in which the terminal device in the RRC idle state sets up an RRC connection, the terminal device sends an RRC setup request message in step S1201, while in the scenario in which the terminal device in the RRC inactive state resumes an RRC connection, the terminal device sends an RRC resume request message in step S1201. In another example, in the scenario in which the terminal device in the RRC idle state sets up an RRC connection, the access network device sends an RRC setup message in step S1202, while in the scenario in which the terminal device in the RRC inactive state resumes an RRC connection, the access network device sends an RRC resume message in step S1202. In still another example, in the scenario in which the terminal device in the RRC idle state sets up an RRC connection, the terminal device sends an RRC setup complete message in step S1203, while in the scenario in which the terminal device in the RRC inactive state resumes an RRC connection, the terminal device sends an RRC resume complete message in step S1203. Repeated parts are not described again.

### Embodiment 2

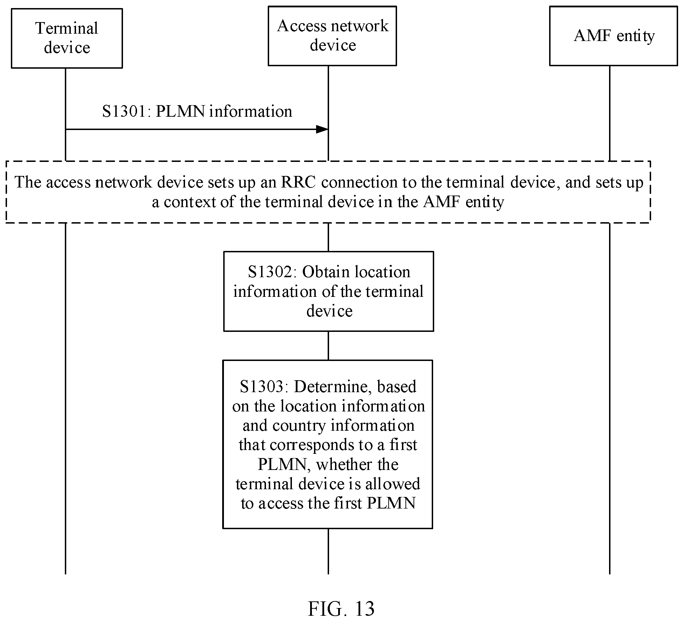

FIG. 13 shows an access control method for a terminal device according to an embodiment of this application. The access control method for a terminal device provided in this application may be applied to an NTN. The method may be applied to a scenario in which a terminal device performs initial access. The access control method for a terminal device may specifically include the following steps.

S1301: A terminal device sends PLMN information to an access network device, where the PLMN information indicates a first PLMN selected by the terminal device. Correspondingly, the access network device receives the PLMN information sent by the terminal device.

For a specific process in which the terminal device sends the PLMN information to the access network device, refer to step S1001. Repeated parts are not described again.

Optionally, after step S1301, the access network device may set up an RRC connection to the terminal device, and set up a context of the terminal device in an AMF entity.

S1302: The access network device obtains location information of the terminal device.

For a specific process in which the access network device obtains the location information of the terminal device, refer to step S1002. Repeated parts are not described again.

It should be noted that there is no strict sequence between setting up, by the access network device, the context of the terminal device in the AMF entity and positioning the terminal device. The access network device may set up the context of the terminal device in the AMF entity, and then position the terminal device; or may position the terminal device, and then set up the context of the terminal device in the AMF entity; or may set up the context of the terminal device in the AMF entity and position the terminal device at the same time. This is not specifically limited herein.

S1303: The access network device determines, based on the location information and country information that corresponds to the first PLMN, whether the terminal device is allowed to access the first PLMN.

For a specific process in which the access network device determines, based on the location information and the country information that corresponds to the first PLMN, whether the terminal device is allowed to access the first PLMN, refer to step S1003. Repeated parts are not described again.

In some embodiments, after determining that the terminal device is not allowed to access the first PLMN, the access network device may send an RRC release request message to the AMF entity, where the RRC release request message is for requesting the AMF entity to release the terminal device.

For example, the RRC release request message may carry at least either of the following information: a release cause and a PLMN identity that is allowed to be selected by the terminal device, and the release cause is that the first PLMN is not a PLMN of a country in which the terminal device is located.

Further, after the access network device sends the RRC release request message to the AMF entity, the AMF entity may send a context release command to the access network device, where the context release command instructs the access network device to release the RRC connection of the terminal device, the context release command carries a release cause, and the release cause is that the first PLMN is not a PLMN of a country in which the terminal device is located.

In a possible implementation, after receiving the context release command, the access network device may send an RRC release message to the terminal device, where the release information carries a PLMN identity that is allowed to be selected by the terminal device.

For example, the RRC release message may carry at least either of the following information: a release cause and the PLMN identity that is allowed to be selected by the terminal device, and the release cause is that the first PLMN is not a PLMN of a country in which the terminal device is located. In the foregoing manner, the terminal device is informed of the PLMN ID that can be selected by the terminal device at a current location, avoiding selecting an inappropriate PLMN when initiating RRC setup or RRC resume again. This can improve an access speed and user experience.

In another possible implementation, after receiving the context release command, the access network device may alternatively hand over the terminal device to a target cell based on the location information of the terminal device, where a country corresponding to at least one PLMN identity of the target cell is the same as a country corresponding to the location information of the terminal device.

In an implementation, the access network device may further send a handover cause to an access network device corresponding to the target cell or an AMF entity connected to an access network device corresponding to the target cell, where the handover cause is that the first PLMN is not a PLMN of a country in which the terminal device is located.

For example, the access network device may send a handover request to the access network device corresponding to the target cell or the AMF entity connected to the access network device corresponding to the target cell, where the handover is for requesting to hand over the terminal device to the target cell, the handover request carries the handover cause, and the handover cause is that the first PLMN is not the PLMN of the country in which the terminal device is located.

For a specific process in which the access network device hands over the terminal device to the target cell based on the location information of the terminal device, refer to related descriptions in Embodiment 1. Details are not described herein again.

In addition, the access network device may further send, to the terminal device, the PLMN identity that is allowed to be selected by the terminal device.

In Embodiment 2 of this application, when the terminal device performs initial access, the access network device may allow access of the terminal device, and then determine whether the location information of the terminal device is consistent with the country information represented by the selected PLMN, to release or perform cell handover on the terminal device that may perform abnormal access, so that abnormal access of the terminal device can be avoided in an RRC access phase. In addition, the access network device may further inform the terminal device of the PLMN that can be selected, so that the terminal device does not select an inappropriate PLMN. This improves efficiency of PLMN selection.

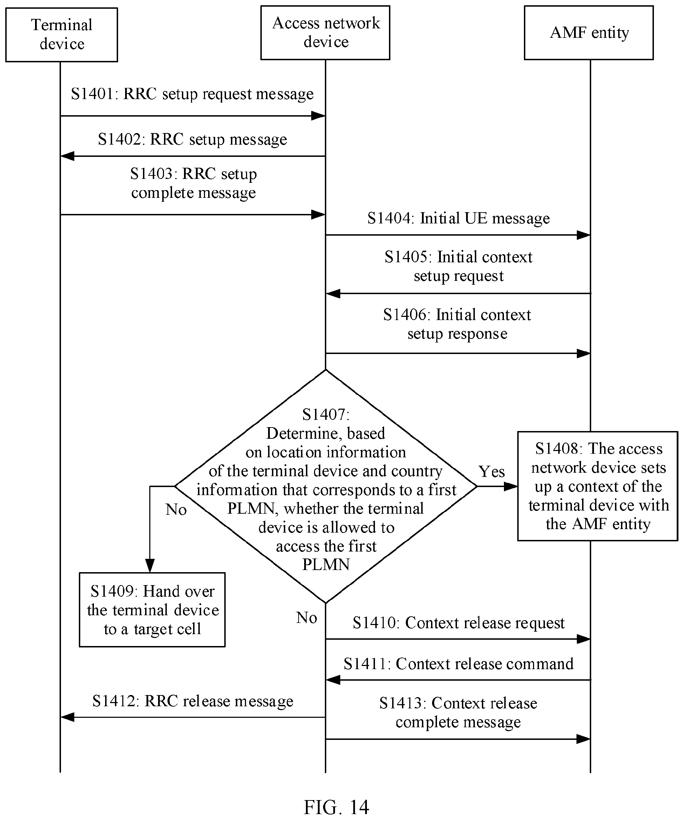

To better understand the method provided in this embodiment of this application, the following describes in detail an access process of the terminal device with reference to a specific scenario. The access process of the terminal device may be shown in FIG. 14.

For details about S1401 to S1403, refer to steps S1201 to S1203. Repeated parts are not described again.

S1404: An access network device sends an initial UE message to an AMF entity.

S1405: The AMF entity sends an initial context setup request to the access network device.

S1406: The access network device sends an initial context setup response to the AMF entity.

S1407: The access network device determines, based on location information of the terminal device and country information that corresponds to a first PLMN, whether the terminal device is allowed to access the first PLMN. If the terminal device is allowed to access the first PLMN, step S 1408 is performed. If the terminal device is not allowed to access the first PLMN, step S1409 or S1410 to S1413 is/are performed.

Optionally, a manner in which the access network device obtains the location information of the terminal device may be: The terminal device reports the location information of the terminal device to the access network device by using an RRC setup request message or an RRC setup complete message.

Alternatively, a manner in which the access network device obtains the location information of the terminal device may be: The access network device positions the terminal device, to obtain the location information of the terminal device.

Alternatively, the terminal device reports the location information to the access network device via an RRC setup complete message, and the access network device positions the terminal device after receiving the location information.

For details about S1408, refer to step S1205. Repeated parts are not described again.

For details about S1409, refer to step S1207. Repeated parts are not described again.

S1410: The access network device sends a context release request to the AMF entity, where the context release is for requesting the AMF entity to release a context of the terminal device.

Optionally, the context release request may carry a release cause, and the release cause is that the first PLMN is not a PLMN of a country in which the terminal device is located. The context release request may further carry a PLMN ID that is allowed to be selected by the terminal device.

S1411: The AMF entity sends a context release command to the access network device, where the context release command instructs the access network device to release the context of the terminal device.

Optionally, the context release command may carry a release cause, and the release cause is that the first PLMN is not a PLMN of a country in which the terminal device is located. The context release command may further carry a PLMN ID that is allowed to be selected by the terminal device.

S1412: The access network device sends an RRC release message to the terminal device.

Optionally, the RRC release message may carry a release cause, and the release cause is that the first PLMN is not a PLMN of a country in which the terminal device is located. The RRC release message may further carry a PLMN ID that is allowed to be selected by the terminal device.

S1413: The access network device sends a context release complete message to the AMF entity, where the context release complete message is for informing the AMF entity that the context of the terminal device has been released.

### Embodiment 3

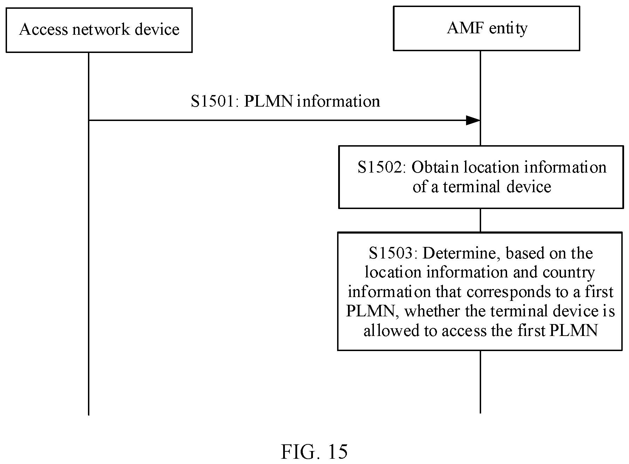

FIG. 15 shows an access control method for a terminal device according to an embodiment of this application. The access control method for a terminal device provided in this application may be applied to an NTN. The method may be applied to a scenario in which a terminal device performs initial access. The access control method for a terminal device may specifically include the following steps.

S1501: An access network device sends PLMN information to an AMF entity. Correspondingly, the AMF entity receives the PLMN information, where the PLMN information indicates a first PLMN selected by a terminal device.

In an implementation, the terminal device may send the PLMN information to the access network device. The access network device sends the PLMN information to the AMF entity.

S1502: The AMF entity obtains location information of the terminal device.

In some embodiments, the location information of the terminal device may come from the terminal device.

In a possible implementation, the terminal device reports the location information to the access network device via an RRC setup complete message. The access network device reports the location information of the terminal device to the AMF entity in a process of setting up a context of the terminal device with the AMF entity.

In another possible implementation, the terminal device sends, to the access network device, a NAS message that carries the location information. The access network device transparently transmits the NAS message to the AMF entity. For example, the terminal device may send an uplink information transfer (UL information transfer) message to the access network device, where the uplink information transfer message includes NAS signaling, and the NAS signaling carries the location information of the terminal device. After receiving the uplink information transfer message, the access network device sends an uplink NAS transfer message to the AMF entity, where the uplink NAS transfer message includes the NAS signaling.

In some other embodiments, the location information of the terminal device may be obtained by the access network device by positioning the terminal device. Then, the access network device reports the location information of the terminal device to the AMF entity in a process of setting up a context of the terminal device with the AMF entity.

S1503: The AMF entity determines, based on the location information and country information that corresponds to the first PLMN, whether the terminal device is allowed to access the first PLMN.

Step S1503 is similar to step S1003, and a difference is that a device performing step S1003 is an access network device, and a device performing step S1503 is an AMF entity. For details of step S1503, refer to related descriptions of step S1003. Details are not described herein again.

In some embodiments, after determining that the terminal device is not allowed to access the first PLMN, the AMF entity may send a context release command to the access network device, where the context release command instructs the access network device to release the terminal device.

Optionally, the context release command may carry at least either of the following information: a release cause and a PLMN identity that is allowed to be selected by the terminal device, and the release cause is that the first PLMN is not a PLMN of a country in which the terminal device is located.

Correspondingly, after receiving the context release command sent by the AMF entity, the access network device releases the terminal device or hands over the terminal device to a target cell according to the context release command, where at least one PLMN identity of the target cell is the PLMN identity that is allowed to be selected by the terminal device.

In some other embodiments, after determining that the terminal device is not allowed to access the first PLMN, the AMF entity may update a mobility restriction list of the terminal device, and send an updated mobility restriction list to the access network device. The updated mobility restriction list includes at least either of the following information: a PLMN identity that is allowed to be selected by the terminal device and a PLMN identity that is not allowed to be selected by the terminal device.

Correspondingly, after receiving the updated mobility restriction list, the access network device may hand over the terminal device to a target cell or release the terminal device based on the mobility restriction list, where at least one PLMN identity of the target cell is the PLMN identity that is allowed to be selected by the terminal device.

In addition, the access network device may further send, to the terminal device, the PLMN identity that is allowed to be selected by the terminal device.

For a process in which the access network device releases the terminal device or hands over the terminal device to the target cell in Embodiment 3 of this application, refer to the process in which the access network device releases the terminal device or hands over the terminal device to the target cell in Embodiment 1. Details are not described herein again.

In Embodiment 3 of this application, when the terminal device performs initial access, access of the terminal device may be allowed, and then the AMF entity determines whether the location information of the terminal device is consistent with the country information represented by the selected PLMN, to release or perform cell handover on the terminal device that may perform abnormal access, so that abnormal access of the terminal device can be avoided in an RRC access phase. In addition, the access network device may further inform the terminal device of the PLMN that can be selected, so that the terminal device does not select an inappropriate PLMN. This improves efficiency of PLMN selection.

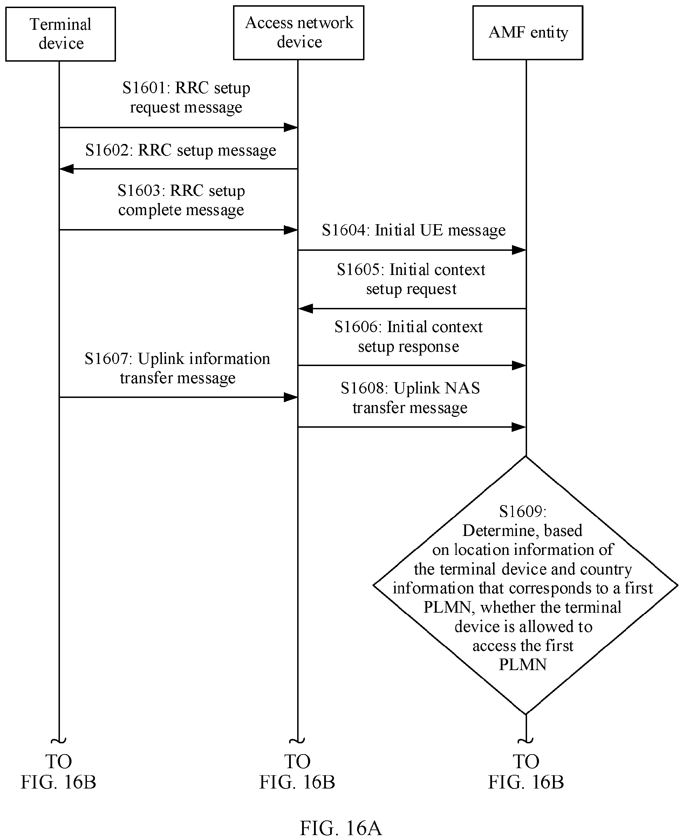

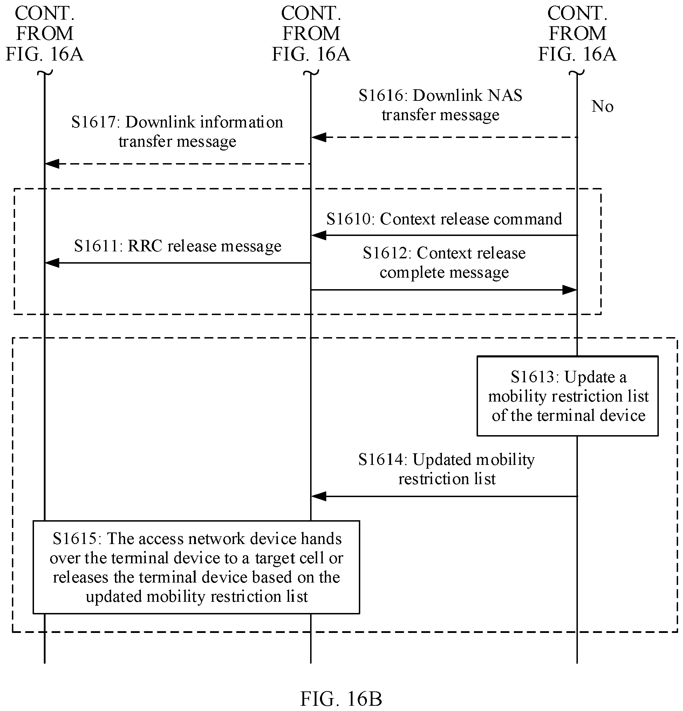

To better understand the method provided in this embodiment of this application, the following describes in detail an access process of the terminal device with reference to a specific scenario. The access process of the terminal device may be shown in FIG. 16A and FIG. 16B.

For details about S1601 to S1606, refer to steps S1401 to S1406. Repeated parts are not described again.

S1607: The terminal device sends an uplink information transfer (UL information transfer) message to an access network device.

The UL information transfer message may include NAS signaling carrying location information of the terminal device.

S1608: The access network device sends an uplink NAS transfer message to an AMF entity.

The uplink NAS transfer message may include the NAS signaling.

S1609: The AMF entity determines, based on the location information of the terminal device and country information that corresponds to a first PLMN, whether the terminal device is allowed to access the first PLMN. If the terminal device is not allowed to access the first PLMN, steps S1610 to S1612 or S1613 to S1618 are performed.

For details about S1610 to S1612, refer to steps S1411 to S1413. Repeated parts are not described again.

S1613: The AMF entity updates a mobility restriction list of the terminal device, where an updated mobility restriction list includes at least either of the following information: a PLMN identity that is allowed to be selected by the terminal device and a PLMN identity that is not allowed to be selected by the terminal device.

S1614: The AMF entity sends the updated mobility restriction list to the access network device.

S1615: The access network device hands over the terminal device to a target cell or releases the terminal device based on the updated mobility restriction list, where at least one PLMN identity of the target cell is the PLMN identity that is allowed to be selected by the terminal device.

For a specific process in which the access network device hands over the terminal device to the target cell based on the mobility restriction list, refer to step S1207 in Embodiment 1. Repeated parts are not described again.

For a specific process in which the access network device releases the terminal device based on the mobility restriction list, refer to step S1206 in Embodiment 1. Repeated parts are not described again.

Optionally, after step S1609, steps S 1616 and S 1617 may be further performed.

S1616: The AMF entity sends a downlink NAS transfer message to the access network device.

S1617: The access network device sends a downlink information transfer message to the terminal device.

Optionally, the downlink NAS transfer message sent by the AMF entity to the access network device may include NAS signaling. The NAS signaling is for informing that a PLMN selected by the terminal device is not a PLMN of a country in which the terminal device is located, and further informing the PLMN ID that is allowed to be selected by the terminal device. The downlink information transfer message sent by the access network device to the terminal device may include the NAS signaling.

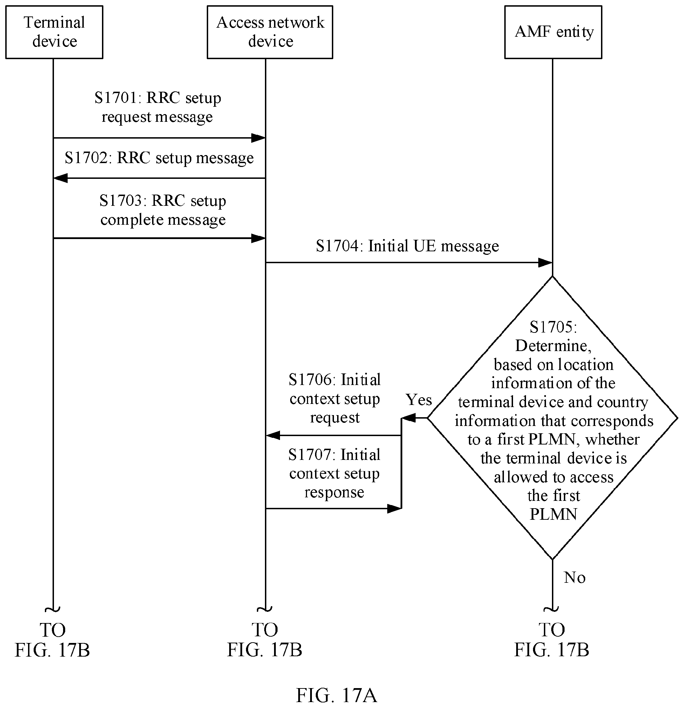

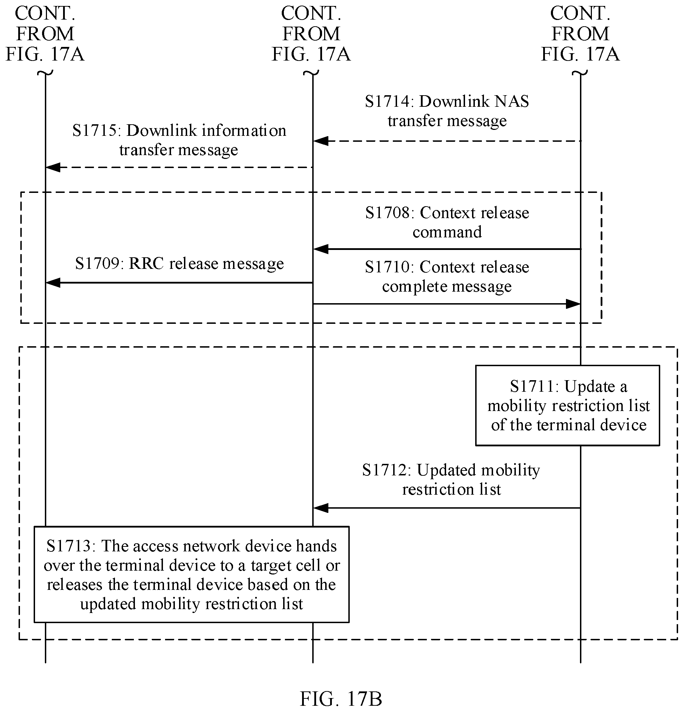

The access process of the terminal device may alternatively be shown in FIG. 17A and FIG. 17B.

For details about S1701 to S1704, refer to steps S1401 to S1404. Details are not described herein again.

An initial UE message sent by an access network device to an AMF entity carries location information of a terminal device.

The access network device may obtain the location information of the terminal device in any one of the following manners.

Manner 1: The terminal device reports the location information to the access network device via an RRC setup complete message or an RRC setup request message.

Manner 2: The location information of the terminal device may alternatively be obtained by the access network device by positioning the terminal device.

Manner 3: The terminal device reports the location information to the access network device via an RRC setup complete message, and the access network device positions the terminal device after receiving the location information.

S1705: The AMF entity determines, based on the location information of the terminal device and country information that corresponds to a first PLMN, whether the terminal device is allowed to access the first PLMN. If the terminal device is allowed to access the first PLMN, steps S 1706 and S 1707 are performed. If the terminal device is not allowed to access the first PLMN, steps S1708 to S1710 or S1711 to S1713 are performed.

For details about S1706 and S1707, refer to steps S1405 and S1406. Details are not described herein again.

For details about S1708 to S1710, refer to steps S1610 to S1612. Details are not described herein again.

For details about S1711 to S1713, refer to steps S1613 to S1615. Details are not described herein again.

Optionally, after step S1705, steps S1714 and S1715 may be further performed. For details about S1714 and S1715, refer to steps S1616 and S1617. Details are not described herein again.

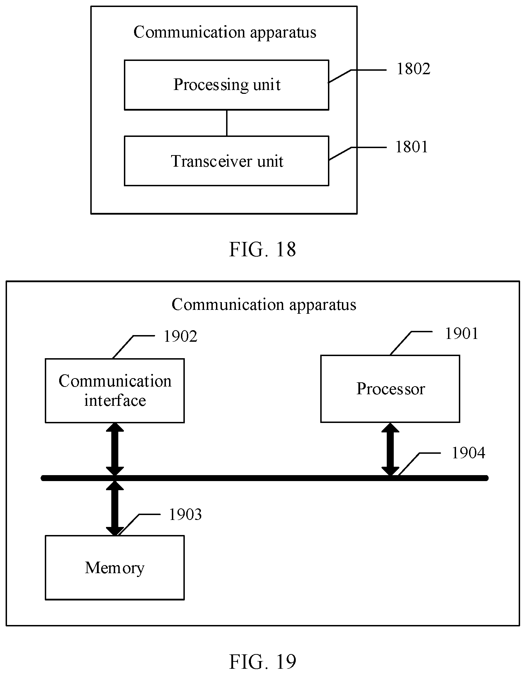

Based on a same inventive concept as the method embodiments, an embodiment of this application provides a communication apparatus. A structure of the communication apparatus may be shown in FIG. 18. The communication apparatus includes a transceiver unit 1801 and a processing unit 1802.

In a specific implementation, the communication apparatus may be specifically configured to implement the method performed by the access network device in embodiments in FIG. 9 to FIG. 12. The apparatus may be the access network device, or may be a chip, a chip set, or a part of a chip, where the chip and the chip set are in the access network device, and the part of the chip is configured to perform a function of a related method. The transceiver unit 1801 is configured to receive PLMN information, where the PLMN information indicates a first PLMN selected by a terminal device. The processing unit 1802 is configured to: obtain location information of the terminal device; and determine, based on the location information and country information that corresponds to the first PLMN, whether the terminal device is allowed to access the first PLMN.

Optionally, when obtaining the location information of the terminal device, the processing unit 1802 may be specifically configured to position the terminal device, to obtain the location information.

Alternatively, when obtaining the location information of the terminal device, the processing unit 1802 may be specifically configured to receive, through the transceiver unit 1801, the location information sent by the terminal device.

Alternatively, when obtaining the location information of the terminal device, the processing unit 1802 may be specifically configured to: receive, through the transceiver unit 1801, the location information sent by the terminal device; and then position the terminal device.

For example, when determining, based on the location information and the country information that corresponds to the first PLMN, whether the terminal device is allowed to access the first PLMN, the processing unit 1802 may be specifically configured to: when country information corresponding to the location information is inconsistent with the country information corresponding to the first PLMN, determine that the terminal device is not allowed to access the first PLMN; or when country information corresponding to the location information is consistent with the country information corresponding to the first PLMN, determine that the terminal device is allowed to access the first PLMN.

In a possible implementation, the transceiver unit 1801 is further configured to: after the processing unit 1802 determines that the terminal device is not allowed to access the first PLMN, send an RRC release message to the terminal device, where the RRC release message is used to release an RRC connection of the terminal device.

For example, the RRC release message carries at least either of the following information: a release cause and a PLMN identity that is allowed to be selected by the terminal device, and the release cause is that the first PLMN is not a PLMN of a country in which the terminal device is located.

In a possible implementation, the processing unit 1802 is further configured to: after the processing unit 1802 determines that the terminal device is not allowed to access the first PLMN, hand over the terminal device to a target cell based on the location information of the terminal device, where a country corresponding to at least one PLMN identity of the target cell is the same as a country corresponding to the location information of the terminal device.

Optionally, the transceiver unit 1801 is further configured to send a handover cause to an access network device corresponding to the target cell or an AMF entity connected to an access network device corresponding to the target cell, where the handover cause is that the first PLMN is not a PLMN of a country in which the terminal device is located.

In a specific implementation, the communication apparatus may be specifically configured to implement the method performed by the access network device in embodiments in FIG. 13 and FIG. 14. The apparatus may be the access network device, or may be a chip, a chip set, or a part of a chip, where the chip and the chip set are in the access network device, and the part of the chip is configured to perform a function of a related method. The transceiver unit 1801 is configured to receive PLMN information, where the PLMN information indicates a first PLMN selected by a terminal device. The processing unit 1802 is configured to: obtain location information of the terminal device; and determine, based on the location information and country information that corresponds to the first PLMN, whether the terminal device is allowed to access the first PLMN.

Optionally, when obtaining the location information of the terminal device, the processing unit 1802 may be specifically configured to position the terminal device, to obtain the location information.

Alternatively, when obtaining the location information of the terminal device, the processing unit 1802 may be specifically configured to receive, through the transceiver unit 1801, the location information sent by the terminal device.

Alternatively, when obtaining the location information of the terminal device, the processing unit 1802 may be specifically configured to: receive, through the transceiver unit 1801, the location information sent by the terminal device; and then position the terminal device.

For example, when determining, based on the location information and the country information that corresponds to the first PLMN, whether the terminal device is allowed to access the first PLMN, the processing unit 1802 may be specifically configured to: when country information corresponding to the location information is inconsistent with the country information corresponding to the first PLMN, determine that the terminal device is not allowed to access the first PLMN; or when country information corresponding to the location information is consistent with the country information corresponding to the first PLMN, determine that the terminal device is allowed to access the first PLMN.

In a possible implementation, the transceiver unit 1801 is further configured to: after the processing unit 1802 determines that the terminal device is not allowed to access the first PLMN, send an RRC release request message to an AMF entity, where the RRC release request message is for requesting the AMF entity to release the terminal device.

For example, the RRC release request message carries at least either of the following information: a release cause and a PLMN identity that is allowed to be selected by the terminal device, and the release cause is that the first PLMN is not a PLMN of a country in which the terminal device is located.

Optionally, the transceiver unit 1801 is further configured to: after sending the RRC release request message to the AMF entity, receive a context release command sent by the AMF entity, where the context release command instructs a network device to release an RRC connection of the terminal device, the context release command carries a release cause, and the release cause is that the first PLMN is not a PLMN of a country in which the terminal device is located; and send an RRC release message to the terminal device, where the release information carries a PLMN identity that is allowed to be selected by the terminal device.

Optionally, the processing unit 1802 is further configured to: after the transceiver unit 1801 receives the context release command, hand over the terminal device to a target cell based on the location information of the terminal device, where a country corresponding to at least one PLMN identity of the target cell is the same as a country corresponding to the location information of the terminal device.

Optionally, the transceiver unit 1801 is further configured to send a handover cause to an access network device corresponding to the target cell or an AMF entity connected to an access network device corresponding to the target cell, where the handover cause is that the first PLMN is not a PLMN of a country in which the terminal device is located.

In a specific implementation, the communication apparatus may be specifically configured to implement the method performed by the AMF entity in embodiments in FIG. 15 to FIG. 17A and FIG. 17B. The apparatus may be the AMF entity, or may be a chip, a chip set, or a part of a chip, where the chip and the chip set are in the AMF entity, and the part of the chip is configured to perform a function of a related method. The transceiver unit 1801 is configured to receive PLMN information, where the PLMN information indicates a first PLMN selected by a terminal device. The processing unit 1802 is configured to: obtain location information of the terminal device; and determine, based on the location information and country information that corresponds to the first PLMN, whether the terminal device is allowed to access the first PLMN.

Optionally, when obtaining the location information of the terminal device, the processing unit 1802 may be specifically configured to receive, through the transceiver unit 1801, the location information sent by an access network device, where the location information is sent by the terminal device to the access network device, or the location information is obtained by the access network device by positioning the terminal device.

For example, when determining, based on the location information and the country information that corresponds to the first PLMN, whether the terminal device is allowed to access the first PLMN, the processing unit 1802 may be specifically configured to: when country information corresponding to the location information is inconsistent with the country information corresponding to the first PLMN, determine that the terminal device is not allowed to access the first PLMN; or when country information corresponding to the location information is consistent with the country information corresponding to the first PLMN, determine that the terminal device is allowed to access the first PLMN.

In a possible implementation, the transceiver unit 1801 is further configured to: after the processing unit 1802 determines that the terminal device is not allowed to access the first PLMN, send a context release command to the access network device, where the context release command instructs the access network device to release the terminal device.

For example, the context release command carries at least either of the following information: a release cause and a PLMN identity that is allowed to be selected by the terminal device, and the release cause is that the first PLMN is not a PLMN of a country in which the terminal device is located.

In a possible implementation, the processing unit 1802 is further configured to: after determining that the terminal device is not allowed to access the first PLMN, update a mobility restriction list of the terminal device. The transceiver unit 1801 is further configured to send an updated mobility restriction list to the access network device, where the updated mobility restriction list includes at least either of the following information: a PLMN identity that is allowed to be selected by the terminal device and a PLMN identity that is not allowed to be selected by the terminal device.

In a specific implementation, the communication apparatus may be specifically configured to implement the method performed by the access network device in embodiments in FIG. 15 to FIG. 17A and FIG. 17B. The apparatus may be the access network device, or may be a chip, a chip set, or a part of a chip, where the chip and the chip set are in the access network device, and the part of the chip is configured to perform a function of a related method. The transceiver unit is configured to receive a context release command sent by an AMF entity, where the context release command instructs an access network device to release a terminal device, the context release command carries at least either of the following information: a release cause and a PLMN identity that is allowed to be selected by the terminal device, and the release cause is that a first PLMN selected by the terminal device is not a PLMN of a country in which the terminal device is located. The processing unit 1802 is configured to hand over the terminal device to a target cell according to the context release command, where at least one PLMN identity of the target cell is the PLMN identity that is allowed to be selected by the terminal device.

Optionally, the transceiver unit 1801 is further configured to send a handover cause to an access network device corresponding to the target cell or the AMF entity, where the handover cause is that the first PLMN is not a PLMN of a country in which the terminal device is located.

In a specific implementation, the communication apparatus may be specifically configured to implement the method performed by the access network device in embodiments in FIG. 15 to FIG. 17A and FIG. 17B. The apparatus may be the access network device, or may be a chip, a chip set, or a part of a chip, where the chip and the chip set are in the access network device, and the part of the chip is configured to perform a function of a related method. The transceiver unit 1801 is configured to receive a mobility restriction list sent by an AMF, where the mobility restriction list includes at least either of the following information: a PLMN identity that is allowed to be selected by a terminal device and a PLMN identity that is not allowed to be selected by the terminal device. The processing unit 1802 is configured to hand over the terminal device to a target cell or release the terminal device based on the mobility restriction list, where at least one PLMN identity of the target cell is the PLMN identity that is allowed to be selected by the terminal device.

Optionally, when handing over the terminal device to the target cell based on the mobility restriction list, the processing unit 1802 is specifically configured to send, through the transceiver unit 1801 based on the mobility restriction list, a handover request to an access network device corresponding to the target cell or the AMF entity, where the handover is for requesting to hand over the terminal device to the target cell.

For example, the handover request carries a handover cause, and the handover cause is that a PLMN selected by the terminal device is not a PLMN of a country in which the terminal device is located.

Optionally, when releasing the terminal device based on the mobility restriction list, the processing unit 1802 may be specifically configured to send, through the transceiver unit 1801, a radio resource control RRC release message to the terminal device based on the mobility restriction list, where the RRC release message is used to release an RRC connection of the terminal device.

For example, the RRC release message carries at least either of the following information: a release cause and a PLMN identity that is allowed to be selected by the terminal device, and the release cause is that a PLMN selected by the terminal device is not a PLMN of a country in which the terminal device is located.

In a specific implementation, the communication apparatus may be specifically configured to implement the method performed by the terminal device in embodiments in FIG. 10 to FIG. 17A and FIG. 17B. The apparatus may be the terminal device, or may be a chip, a chip set, or a part of a chip, where the chip and the chip set are in the terminal device, and the part of the chip is configured to perform a function of a related method. The transceiver unit 1801 is configured to communicate with an access network device. The processing unit 1802 is configured to: send PLMN information to the access network device through the transceiver unit 1801, where the PLMN information indicates a PLMN selected by a terminal device; and receive, through transceiver unit 1801, a radio resource control RRC release message sent by the access network device, where the RRC release message is used to release an RRC connection of the terminal device, the RRC release message carries at least either of the following information: a release cause and a PLMN identity that is allowed to be selected by the terminal device, and the release cause is that the PLMN selected by the terminal device is not a PLMN of a country in which the terminal device is located.

Optionally, the processing unit 1802 is further configured to: after receiving, through transceiver unit 1801, the radio resource control RRC release message sent by the access network device, reselect a PLMN based on the PLMN identity that is allowed to be selected by the terminal device.

In embodiments of this application, division into modules is an example, and is merely logical function division. During actual implementation, there may be another division manner. In addition, in embodiments of this application, functional modules may be integrated into one processor, or each of the modules may exist alone physically, or two or more modules may be integrated into one module. The integrated module may be implemented in a form of hardware, or may be implemented in a form of a software functional module. It may be understood that, for functions or implementations of the modules in embodiments of this application, further refer to related descriptions in the method embodiments.

In a possible manner, the communication apparatus may be shown in FIG. 19. The communication apparatus may be a communication device or a chip in the communication device. The communication device may be a terminal device, or may be a network device. The apparatus includes a processor 1901, a communication interface 1902, and a memory 1903. The processing unit 1802 may be the processor 1901. The transceiver unit 1801 may be the communication interface 1902.

The processor 1901 may be a central processing module (central processing unit, CPU), a digital processing module, or the like. The communication interface 1902 may be a transceiver, an interface circuit such as a transceiver circuit, a transceiver chip, or the like. The apparatus further includes a memory 1903, configured to store a program executed by the processor 1901. The memory 1903 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory 1903 is any other medium that can carry or store expected program code in a form of an instruction or a data structure and that can be accessed by a computer, but is not limited thereto.

The processor 1901 is configured to execute the program code stored in the 1903, and is specifically configured to perform an action of the processing unit 1802. Details are not described in this application again. The communication interface 1902 is specifically configured to perform an action of the transceiver unit 1801. Details are not described in this application again.

In this embodiment of this application, a specific connection medium between the communication interface 1902, the processor 1901, and the memory 1903 is not limited. In this embodiment of this application, the memory 1903, the processor 1901, and the communication interface 1902 are connected by using a bus 1904 in FIG. 19. The bus is represented by using a bold line in FIG. 19. A manner of connection between other components is merely an example for description, and is not limited thereto. The bus may be classified into an address bus, a data bus, a control bus, and the like. For ease of representation, only one bold line is used to represent the bus in FIG. 19, but this does not mean that there is only one bus or only one type of bus.

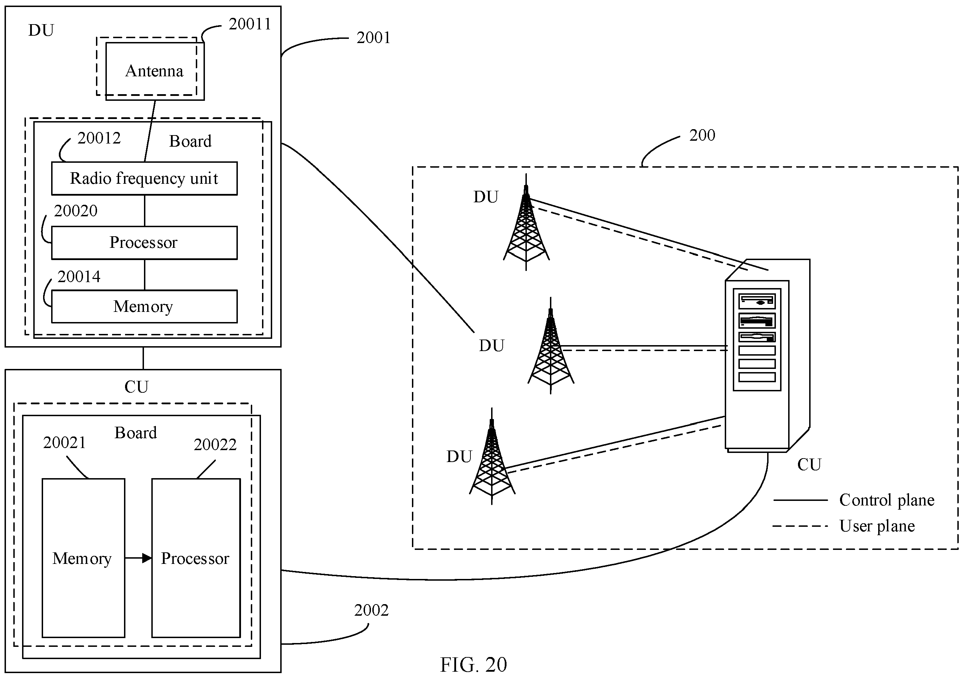

FIG. 20 is a schematic diagram of a structure of an access network device according to an embodiment of this application, for example, may be a schematic diagram of a structure of a base station. As shown in FIG. 20, the base station may perform functions of the access network device in the method embodiments in FIG. 10 to FIG. 17A and FIG. 17B. The base station 200 may include one or more distributed units (distributed units, DUs) 2001 and one or more central units (central units, CUs) 2002. The DU 2001 may include at least one antenna 20011, at least one radio frequency unit 20015, at least one processor 20020, and at least one memory 20014. The DU 2001 is mainly configured to: receive and send a radio frequency signal, convert a radio frequency signal and a baseband signal, and perform partial baseband processing. The CU 2002 may include at least one processor 20022 and at least one memory 20021. The CU 2002 and the DU 2001 may communicate with each other through an interface. A control plane (Control plane) interface may be Fs-C, for example, F1-C, and a user plane (User Plane) interface may be Fs-U, for example, F1-U.

The CU 2002 is mainly configured to: perform baseband processing, control the base station, and the like. The DU 2001 and the CU 2002 may be physically disposed together, or may be physically disposed separately, in other words, may be a distributed base station. The CU 2002 is a control center of the base station, may also be referred to as a processing unit, and is mainly configured to implement a baseband processing function. For example, the CU 2002 may be used by the access network device to perform an operation procedure of communication between the access network device and the terminal device in the method embodiments in FIG. 10 to FIG. 12. Alternatively, the CU 2002 may be used by the access network device to perform an operation procedure of communication between the access network device and the AMF entity in the method embodiments in FIG. 13 and FIG. 14. Alternatively, the CU 2002 may be used by the access network device to perform an operation procedure of communication between the access network device and the AMF entity in the method embodiments in FIG. 15 to FIG. 17A and FIG. 17B.

Specifically, baseband processing on the CU and the DU may be divided based on a protocol layer of a wireless network. For example, functions of a PDCP layer and a layer above the PDCP layer are deployed on the CU, and functions of protocol layers below the PDCP layer, such as an RLC layer and a MAC layer, are deployed on the DU. For another example, the CU implements functions of an RRC layer and a PDCP layer, and the DU implements functions of an RLC layer, a MAC layer, and a physical (physical, PHY) layer.

In addition, optionally, the base station 200 may include one or more radio frequency units (RUs), one or more DUs, and one or more CUs. The DU may include at least one processor 20020 and at least one memory 20014, the RU may include at least one antenna 20011 and at least one radio frequency unit 20015, and the CU may include at least one processor 20022 and at least one memory 20021.

In an example, the CU 2002 may include one or more boards, and a plurality of boards may jointly support a radio access network (for example, a 5G network) of a single access standard, or may separately support radio access networks (such as an LTE network, a 5G network, or another network) of different access standards. The memory 20021 and the processor 20022 may serve one or more boards. In other words, a memory and a processor may be separately disposed on each board. Alternatively, a plurality of boards may share a same memory and a same processor. In addition, a necessary circuit may be further disposed on each board. The DU 2001 may include one or more boards, and a plurality of boards may jointly support a radio access network (for example, a 5G network) of a single access standard, or may separately support radio access networks (such as an LTE network, a 5G network, or another network) of different access standards. The memory 20014 and the processor 20020 may serve one or more boards. In other words, a memory and a processor may be separately disposed on each board. Alternatively, a plurality of boards may share a same memory and a same processor. In addition, a necessary circuit may be further disposed on each board.

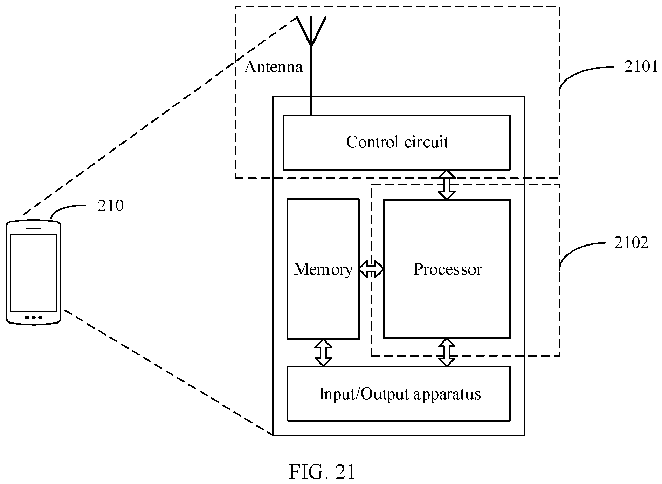

FIG. 21 is a schematic diagram of a structure of a terminal device according to an embodiment of this application. The terminal device may be used in the systems shown in FIG. 4 to FIG. 9, to perform functions of the terminal device in the foregoing method embodiments in FIG. 10 to FIG. 17A and FIG. 17B. For ease of description, FIG. 21 shows only main components of the terminal device. As shown in FIG. 21, the terminal device 210 includes a processor, a memory, a control circuit, an antenna, and an input/output apparatus. The processor is mainly configured to: process a communication protocol and communication data, control the entire terminal device, execute a software program, and process data of the software program, for example, is configured to support the terminal device in performing the action described in the foregoing method embodiments in FIG. 10 to FIG. 17A and FIG. 17B. The memory is mainly configured to store the software program and the data. The control circuit is mainly configured to: perform conversion between a baseband signal and a radio frequency signal, and process the radio frequency signal. A combination of the control circuit and the antenna may also be referred to as a transceiver that is mainly configured to transmit and receive a radio frequency signal in a form of an electromagnetic wave. The input/output apparatus, for example, a touchscreen, a display, or a keyboard, is mainly configured to: receive data entered by a user, and output data to the user.

After the terminal device is powered on, the processor may read the software program in the memory, explain and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 21 shows only one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or an independent storage element. This is not limited in this embodiment of this application.

In an optional implementation, the terminal device may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor in FIG. 21. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to enhance a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

In this embodiment of this application, the antenna and the control circuit that have receiving and sending functions may be considered as a transceiver unit 2101 of the terminal device 210, for example, to support the terminal device in performing a receiving function and a sending function. A processor 2102 having a processing function is considered as a processing unit 2102 of the terminal device 210. As shown in FIG. 21, the terminal device 210 includes the transceiver unit 2101 and the processing unit 2102. The transceiver unit may also be referred to as a transceiver, a transceiver machine, a transceiver apparatus, or the like. Optionally, a component that is in the transceiver unit 2101 and that is configured to implement a receiving function may be considered as a receiving unit. A component that is in the transceiver unit 2101 and that is configured to implement a sending function may be considered as a sending unit. That is, the transceiver unit 2101 includes the receiving unit and the sending unit. The receiving unit may also be referred to as a receiver machine, an input port, a receiver circuit, or the like. The sending unit may be referred to as a transmitter machine, a transmitter, a transmitter circuit, or the like.

The processor 2102 may be configured to execute instructions stored in the memory, to control the transceiver unit 2101 to receive and/or send a signal, thereby completing the functions of the terminal device in the foregoing method embodiments. The processor 2102 further includes an interface, configured to implement a signal input/output function. In an implementation, it may be considered that a function of the transceiver unit 2101 is implemented by using a transceiver circuit or a dedicated transceiver chip.

An embodiment of the present invention further provides a computer-readable storage medium, configured to store computer software instructions that need to be executed for execution of the foregoing processor. The computer-readable storage medium includes a program that needs to be executed for execution of the foregoing processor.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program instructions may alternatively be loaded onto a computer or another programmable data processing device, so that a series of operations and steps are performed on the computer or another programmable device, to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to this application without departing from the spirit and scope of this application. In this way, if these modifications and variations to this application fall within the scope of the claims of this application and their equivalent technologies, this application is also intended to cover these modifications and variations.

## Claims

1. An access control method for a terminal device, comprising:
receiving, by a network device, public land mobile network PLMN information, wherein the PLMN information indicates a first PLMN selected by a terminal device, and the network device is an access network device or an access and mobility management function AMF entity;
obtaining, by the network device, location information of the terminal device; and
determining, by the network device based on the location information and country information that corresponds to the first PLMN, whether the terminal device is allowed to access the first PLMN.

2. The method according to claim 1, wherein the network device is the access network device, and the obtaining, by the network device, location information of the terminal device comprises:
positioning, by the network device, the terminal device, to obtain the location information; or
receiving, by the network device, the location information sent by the terminal device.

3. The method according to claim 1, wherein the network device is the AMF entity, and the obtaining, by the network device, location information of the terminal device comprises:
receiving, by the network device, the location information sent by an access network device, wherein the location information is sent by the terminal device to the access network device, or the location information is obtained by the access network device by positioning the terminal device.

4. The method according to any one of claims 1 to 3, wherein the determining, by the network device based on the location information and country information that corresponds to the first PLMN, whether the terminal device is allowed to access the first PLMN comprises:
when country information corresponding to the location information is inconsistent with the country information corresponding to the first PLMN, determining, by the network device, that the terminal device is not allowed to access the first PLMN; or
when country information corresponding to the location information is consistent with the country information corresponding to the first PLMN, determining, by the network device, that the terminal device is allowed to access the first PLMN.

5. The method according to claim 4, wherein the network device is the access network device, and after the determining, by the network device, that the terminal device is not allowed to access the first PLMN, the method further comprises:
sending, by the network device, a radio resource control RRC release message to the terminal device, wherein the RRC release message is used to release an RRC connection of the terminal device.

6. The method according to claim 5, wherein the RRC release message carries at least either of the following information: a release cause and a PLMN identity that is allowed to be selected by the terminal device, and the release cause is that the first PLMN is not a PLMN of a country in which the terminal device is located.

7. The method according to claim 4, wherein the network device is the access network device, and after the determining, by the network device, that the terminal device is not allowed to access the first PLMN, the method further comprises:
sending, by the network device, an RRC release request message to an AMF entity, wherein the RRC release request message is for requesting the AMF entity to release the terminal device.

8. The method according to claim 7, wherein the RRC release request message carries at least either of the following information: a release cause and a PLMN identity that is allowed to be selected by the terminal device, and the release cause is that the first PLMN is not a PLMN of a country in which the terminal device is located.

9. The method according to claim 7 or 8, wherein after the sending, by the network device, an RRC release request message to an AMF entity, the method further comprises:
receiving, by the network device, a context release command sent by the AMF entity, wherein the context release command instructs the network device to release an RRC connection of the terminal device, the context release command carries a release cause, and the release cause is that the first PLMN is not a PLMN of a country in which the terminal device is located; and
sending, by the network device, an RRC release message to the terminal device, wherein the release information carries a PLMN identity that is allowed to be selected by the terminal device.

10. The method according to claim 4, wherein the network device is the access network device, and after the determining, by the network device, that the terminal device is not allowed to access the first PLMN, the method further comprises:
handing over, by the access network device, the terminal device to a target cell based on the location information of the terminal device, wherein a country corresponding to at least one PLMN identity of the target cell is the same as a country corresponding to the location information of the terminal device.

11. The method according to claim 10, wherein the method further comprises:
sending, by the network device, a handover cause to an access network device corresponding to the target cell or an AMF entity connected to an access network device corresponding to the target cell, wherein the handover cause is that the first PLMN is not a PLMN of a country in which the terminal device is located.

12. The method according to claim 4, wherein the network device is the AMF entity, and after the determining, by the network device, that the terminal device is not allowed to access the first PLMN, the method further comprises:
sending, by the network device, a context release command to the access network device, wherein the context release command instructs the access network device to release the terminal device.

13. The method according to claim 12, wherein the context release command carries at least either of the following information: a release cause and a PLMN identity that is allowed to be selected by the terminal device, and the release cause is that the first PLMN is not a PLMN of a country in which the terminal device is located.

14. The method according to claim 4, wherein the network device is the AMF entity, and after the determining, by the network device, that the terminal device is not allowed to access the first PLMN, the method comprises:
updating, by the network device, a mobility restriction list of the terminal device, wherein an updated mobility restriction list comprises at least either of the following information: a PLMN identity that is allowed to be selected by the terminal device and a PLMN identity that is not allowed to be selected by the terminal device; and
sending, by the network device, the updated mobility restriction list to the access network device.

15. An access control method for a terminal device, comprising:
receiving, by an access network device, a context release command sent by an access and mobility management function AMF entity, wherein the context release command instructs the access network device to release a terminal device, the context release command carries at least either of the following information: a release cause and a PLMN identity that is allowed to be selected by the terminal device, and the release cause is that a first PLMN selected by the terminal device is not a PLMN of a country in which the terminal device is located; and
handing over, by the access network device, the terminal device to a target cell according to the context release command, wherein at least one PLMN identity of the target cell is the PLMN identity that is allowed to be selected by the terminal device.

16. The method according to claim 15, wherein the method further comprises:
sending, by the access network device, a handover cause to an access network device corresponding to the target cell or the AMF entity, wherein the handover cause is that the first PLMN is not a PLMN of a country in which the terminal device is located.

17. An access control method for a terminal device, comprising:
receiving, by an access network device, a mobility restriction list sent by an access and mobility management function AMF, wherein the mobility restriction list comprises at least either of the following information: a public land mobile network PLMN identity that is allowed to be selected by a terminal device and a PLMN identity that is not allowed to be selected by the terminal device; and
handing over, by the access network device, the terminal device to a target cell or releasing the terminal device based on the mobility restriction list, wherein at least one PLMN identity of the target cell is the PLMN identity that is allowed to be selected by the terminal device.

18. The method according to claim 17, wherein the handing over, by the access network device, the terminal device to a target cell based on the mobility restriction list comprises:
sending, by the access network device based on the mobility restriction list, a handover request to an access network device corresponding to the target cell or the AMF entity, wherein the handover is for requesting to hand over the terminal device to the target cell.

19. The method according to claim 18, wherein the handover request carries a handover cause, and the handover cause is that a PLMN selected by the terminal device is not a PLMN of a country in which the terminal device is located.

20. The method according to claim 17, wherein the releasing, by the access network device, the terminal device based on the mobility restriction list comprises:
sending, by the access network device, a radio resource control RRC release message to the terminal device based on the mobility restriction list, wherein the RRC release message is used to release an RRC connection of the terminal device.

21. The method according to claim 20, wherein the RRC release message carries at least either of the following information: a release cause and a PLMN identity that is allowed to be selected by the terminal device, and the release cause is that a PLMN selected by the terminal device is not a PLMN of a country in which the terminal device is located.

22. An access control method for a terminal device, comprising:
sending, by a terminal device, public land mobile network PLMN information to an access network device, wherein the PLMN information indicates a PLMN selected by the terminal device; and
receiving, by the terminal device, a radio resource control RRC release message sent by the access network device, wherein the RRC release message is used to release an RRC connection of the terminal device, the RRC release message carries at least either of the following information: a release cause and a PLMN identity that is allowed to be selected by the terminal device, and the release cause is that the PLMN selected by the terminal device is not a PLMN of a country in which the terminal device is located.

23. The method according to claim 22, wherein after the receiving, by the terminal device, a radio resource control RRC release message sent by the access network device, the method further comprises:
reselecting, by the terminal device, a PLMN based on the PLMN identity that is allowed to be selected by the terminal device.

24. An access control apparatus for a terminal device, wherein the apparatus is used in an access network device or an access and mobility management function AMF entity, and the apparatus comprises:
a transceiver unit, configured to receive public land mobile network PLMN information, wherein the PLMN information indicates a first PLMN selected by a terminal device; and
a processing unit, configured to: obtain location information of the terminal device; and determine, based on the location information and country information that corresponds to the first PLMN, whether the terminal device is allowed to access the first PLMN.

25. The apparatus according to claim 24, wherein the apparatus is used in the access network device, and when obtaining the location information of the terminal device, the processing unit is specifically configured to:
position the terminal device, to obtain the location information; or
receive, through the transceiver unit, the location information sent by the terminal device.

26. The apparatus according to claim 24, wherein the apparatus is used in the AMF entity, and when obtaining the location information of the terminal device, the processing unit is specifically configured to:
receive, through the transceiver unit, the location information sent by an access network device, wherein the location information is sent by the terminal device to the access network device, or the location information is obtained by the access network device by positioning the terminal device.

27. The apparatus according to any one of claims 24 to 26, wherein when determining, based on the location information and the country information that corresponds to the first PLMN, whether the terminal device is allowed to access the first PLMN, the processing unit is specifically configured to:
when country information corresponding to the location information is inconsistent with the country information corresponding to the first PLMN, determine that the terminal device is not allowed to access the first PLMN; or
when country information corresponding to the location information is consistent with the country information corresponding to the first PLMN, determine that the terminal device is allowed to access the first PLMN.

28. The apparatus according to claim 27, wherein the apparatus is used in the access network device, and the transceiver unit is further configured to:
after the processing unit determines that the terminal device is not allowed to access the first PLMN, send a radio resource control RRC release message to the terminal device, wherein the RRC release message is used to release an RRC connection of the terminal device.

29. The apparatus according to claim 28, wherein the RRC release message carries at least either of the following information: a release cause and a PLMN identity that is allowed to be selected by the terminal device, and the release cause is that the first PLMN is not a PLMN of a country in which the terminal device is located.

30. The apparatus according to claim 27, wherein the apparatus is used in the access network device, and the transceiver unit is further configured to:
after the processing unit determines that the terminal device is not allowed to access the first PLMN, send an RRC release request message to an AMF entity, wherein the RRC release request message is for requesting the AMF entity to release the terminal device.

31. The apparatus according to claim 30, wherein the RRC release request message carries at least either of the following information: a release cause and a PLMN identity that is allowed to be selected by the terminal device, and the release cause is that the first PLMN is not a PLMN of a country in which the terminal device is located.

32. The apparatus according to claim 30 or 31, wherein the transceiver unit is further configured to:
after sending the RRC release request message to the AMF entity, receive a context release command sent by the AMF entity, wherein the context release command instructs the network device to release an RRC connection of the terminal device, the context release command carries a release cause, and the release cause is that the first PLMN is not a PLMN of a country in which the terminal device is located; and
send an RRC release message to the terminal device, wherein the release information carries a PLMN identity that is allowed to be selected by the terminal device.

33. The apparatus according to claim 27, wherein the apparatus is used in the access network device, and the processing unit is further configured to:
after determining that the terminal device is not allowed to access the first PLMN, hand over the terminal device to a target cell based on the location information of the terminal device, wherein a country corresponding to at least one PLMN identity of the target cell is the same as a country corresponding to the location information of the terminal device.

34. The apparatus according to claim 33, wherein the transceiver unit is further configured to:
send a handover cause to an access network device corresponding to the target cell or an AMF entity connected to an access network device corresponding to the target cell, wherein the handover cause is that the first PLMN is not a PLMN of a country in which the terminal device is located.

35. The apparatus according to claim 27, wherein the apparatus is used in the AMF entity, and the transceiver unit is further configured to:
after the processing unit determines that the terminal device is not allowed to access the first PLMN, send a context release command to the access network device, wherein the context release command instructs the access network device to release the terminal device.

36. The apparatus according to claim 35, wherein the context release command carries at least either of the following information: a release cause and a PLMN identity that is allowed to be selected by the terminal device, and the release cause is that the first PLMN is not a PLMN of a country in which the terminal device is located.

37. The apparatus according to claim 27, wherein the apparatus is used in the AMF entity, and the processing unit is further configured to:
after determining that the terminal device is not allowed to access the first PLMN, update a mobility restriction list of the terminal device, wherein an updated mobility restriction list comprises at least either of the following information: a PLMN identity that is allowed to be selected by the terminal device and a PLMN identity that is not allowed to be selected by the terminal device; and
the transceiver unit is further configured to:
send the updated mobility restriction list to the access network device.

38. An access control apparatus for a terminal device, comprising:
a transceiver unit, configured to receive a context release command sent by an access and mobility management function AMF entity, wherein the context release command instructs the access network device to release a terminal device, the context release command carries at least either of the following information: a release cause and a public land mobile network PLMN identity that is allowed to be selected by the terminal device, and the release cause is that a first PLMN selected by the terminal device is not a PLMN of a country in which the terminal device is located; and
a processing unit, configured to hand over the terminal device to a target cell according to the context release command, wherein at least one PLMN identity of the target cell is the PLMN identity that is allowed to be selected by the terminal device.

39. The apparatus according to claim 38, wherein the transceiver unit is further configured to:
send a handover cause to an access network device corresponding to the target cell or the AMF entity, wherein the handover cause is that the first PLMN is not a PLMN of a country in which the terminal device is located.

40. An access control apparatus for a terminal device, comprising:
a transceiver unit, configured to receive a mobility restriction list sent by an access and mobility management function AMF, wherein the mobility restriction list comprises at least either of the following information: a public land mobile network PLMN identity that is allowed to be selected by a terminal device and a PLMN identity that is not allowed to be selected by the terminal device; and
a processing unit, configured to hand over the terminal device to a target cell or release the terminal device based on the mobility restriction list, wherein at least one PLMN identity of the target cell is the PLMN identity that is allowed to be selected by the terminal device.

41. The apparatus according to claim 40, wherein when handing over the terminal device to the target cell based on the mobility restriction list, the processing unit is specifically configured to:
send, through the transceiver unit based on the mobility restriction list, a handover request to an access network device corresponding to the target cell or the AMF entity, wherein the handover is for requesting to hand over the terminal device to the target cell.

42. The apparatus according to claim 41, wherein the handover request carries a handover cause, and the handover cause is that a PLMN selected by the terminal device is not a PLMN of a country in which the terminal device is located.

43. The apparatus according to claim 40, wherein when releasing the terminal device based on the mobility restriction list, the processing unit is specifically configured to:
send, through the transceiver unit, a radio resource control RRC release message to the terminal device based on the mobility restriction list, wherein the RRC release message is used to release an RRC connection of the terminal device.

44. The apparatus according to claim 43, wherein the RRC release message carries at least either of the following information: a release cause and a PLMN identity that is allowed to be selected by the terminal device, and the release cause is that a PLMN selected by the terminal device is not a PLMN of a country in which the terminal device is located.

45. An access control apparatus for a terminal device, comprising:
a transceiver unit, configured to communicate with an access network device; and
a processing unit, configured to: send public land mobile network PLMN information to the access network device through the transceiver unit, wherein the PLMN information indicates a PLMN selected by a terminal device; and receive, through the transceiver unit, a radio resource control RRC release message sent by the access network device, wherein the RRC release message is used to release an RRC connection of the terminal device, the RRC release message carries at least either of the following information: a release cause and a PLMN identity that is allowed to be selected by the terminal device, and the release cause is that the PLMN selected by the terminal device is not a PLMN of a country in which the terminal device is located.

46. The apparatus according to claim 45, wherein the processing unit is further configured to:
after receiving, through the transceiver unit, the radio resource control RRC release message sent by the access network device, reselect a PLMN based on the PLMN identity that is allowed to be selected by the terminal device.

47. A communication device, wherein the communication device comprises a transceiver, a processor, and a memory; the memory stores program instructions; and when the program instructions are executed, the communication device is enabled to perform the method according to any one of claims 1 to 14, perform the method according to either of claims 15 and 16, perform the method according to any one of claims 17 to 21, or perform the method according to either of claims 22 and 23.

48. A chip, wherein the chip is coupled to a memory in an electronic device; and when the chip runs, the chip is enabled to invoke program instructions stored in the memory, to implement the method according to any one of claims 1 to 14, implement the method according to either of claims 15 and 16, implement the method according to any one of claims 17 to 21, or implement the method according to either of claims 22 and 23.

49. A computer-readable storage medium, wherein the computer-readable storage medium comprises program instructions; and when the program instruction runs on a device, the device is enabled to perform the method according to any one of claims 1 to 14, implement the method according to either of claims 15 and 16, implement the method according to any one of claims 17 to 21, or implement the method according to either of claims 22 and 23.
